# EUROPÄISCHE PATENTSCHRIFT

(11) **EP 2 178 963 B1**
(45) Veröffentlichungstag und Bekanntmachung des Hinweises auf die Patenterteilung: **17.07.2013**
(21) Anmeldenummer: 08803058.0
(22) Anmeldetag: 15.08.2008
(51) Int. Cl.: C08K 5/54

(54) **SILANVERNETZENDER KLEB-ODER DICHTSTOFF MIT N-SILYLALKYLAMIDEN UND SEINE VERWENDUNG**
SILANE-CROSSLINKING ADHESIVE OR SEALANT COMPRISING N-SILYLALKYLAMIDES AND USE THEREOF
ADHÉSIF OU AGENT D'ÉTANCHÉITÉ À RÉTICULATION SILANE AVEC N-SILYLALKYLAMIDES ET SON UTILISATION

(30) Priorität: 15.08.2007 DE 102007038661
(43) Veröffentlichungstag der Anmeldung: 28.04.2010
(73) Patentinhaber: Henkel AG & Co. KGaA, 40589 Düsseldorf (DE)
(72) Erfinder: PLANTENBERG, Thomas, 51371 Leverkusen (DE); DUNEKAKE, Ralf, 40589 Düsseldorf (DE); HELPENSTEIN, Klaus, 41199 Mönchengladbach (DE); KLEIN, Johann, 40593 Düsseldorf (DE)
(86) Internationale Anmeldenummer: PCT/EP2008/060767
(87) Internationale Veröffentlichungsnummer: WO 2009/022012

(56) Entgegenhaltungen:
- US-A- 4 826 915
- DATABASE WPI Week 197817 Thomson Scientific, London, GB; AN 1978-31592A XP002502223 & SU 555 104 A (SEREBRENNIKOVA E V) 18. Juli 1977 (1977-07-18)

## Beschreibung

Die vorliegende Erfindung betrifft einen silanvernetzenden Kleb- oder Dichtstoff, der ein Polymer mit einem organischen Grundgerüst, das mindestens zwei Alkoxy- oder Acyloxysilangruppen, die auch als Alkoxy- oder Acyloxysilylgruppen bezeichnet werden, und N-Silylalkylamide als Additive enthält.

Silanvernetzende Kleb- und Dichtstoffmassen enthalten als Bindemittel alkoxysilylterminierte Polymere. Polymersysteme, die über reaktive Alkoxysilylgruppen verfügen, sind seit langem bekannt. In Gegenwart von Luftfeuchtigkeit sind diese alkoxysilyltermininierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

Die Polymere weisen in der Regel ein organisches Grundgerüst auf, das Alkoxysilylgruppen beziehungsweise Alkoxysilangruppen trägt. Bei dem organischen Grundgerüst kann es sich beispielsweise um Polyurethane, Polyester, Polyether, Polyole, Polyacrylate oder -methacrylate, Polyvinylalkohole etc. handeln.

So ist beispielsweise aus der WO 99/48942 eine einkomponentige Reaktivsystem-Zusammensetzung bekannt, die ein alkoxysilylterminiertes Polyurethan, einen Aushärtungskatalysator sowie gegebenenfalls übliche Zusatzstoffe enthält.

Zum elastischen Kleben werden Klebstoffe benötigt, die zwar große Festigkeiten der Verklebungen haben, jedoch auch ausreichend elastisch sind, um dauerhaft den Klebeverbund aufrecht erhalten zu können. Wird die Festigkeit eines Klebstoffs erhöht, so kommt es meist auch zu einer Abnahme der elastischen Eigenschaften. Meist wird die höhere Festigkeit durch die Erhöhung der Vernetzungsdichte erreicht, was aber gleichzeitig zu einer Abnahme der Elastizität führt. Die Erhöhung der Elastizität durch Zugabe einer größeren Menge eines Weichmachers führt zu dem Problem, dass auch die Abwanderung bzw. Migration steigt, was im allgemeinen ein unerwünschter Effekt ist.

Es ist Aufgabe der vorliegenden Erfindung, silanvernetzende Kleb- oder Dichtstoffe anzugeben, die verbesserte mechanische Eigenschaften aufweisen. Insbesondere soll die Reißdehnung (Elastizität) bei gleichzeitiger Erhöhung der Zug- und/oder Scherfestigkeit deutlich verbessert werden.

Überraschenderweise wurde gefunden, dass diese Aufgabe durch die Verwendung von N-Silylalkylamiden als Additive gelöst werden kann.

Gegenstand der vorliegenden Erfindung ist daher ein silanvemetzender Kleb- oder Dichtstoff, enthaltend ein Polymer, bestehend aus einem organischen Grundgerüst mit Kohlenstoffatomen in der Hauptkette, das mindestens zwei Alkoxy- und / oder Acyloxysilylgruppen trägt, der dadurch gekennzeichnet ist, dass als weitere Komponente Verbindungen der Formel (I) 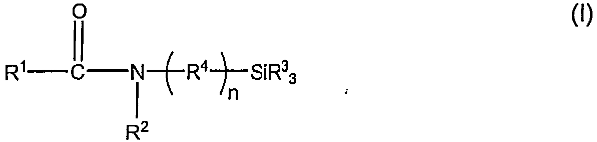 worin
R¹ ein geradkettiger oder verzweigter, substituierter oder unsubstituierter Alkylrest mit 1 bis 24 C-Atomen ist,
R² ein Wasserstoff- oder ein geradkettiger oder verzweigter Kohlenwasserstoffrest mit 1 bis 10 C-Atomen ist,
R³ ein Alkoxyrest mit 1 bis 8 C-Atomen oder Alkylrest mit 1 bis 24 C-Atomen ist,
R⁴ ein geradkettiger bzw. gradliniger oder verzweigter Alkylenrest mit 1 bis 8 C-Atomen, worin C-Atome durch Stickstoff- oder Sauerstoffatome substituiert sein können; ist,
n = 1 bis 8, bevorzugt n = 3 bis 8, ist,
wobei die Reste R³ jeweils gleich oder verschieden sein können und mindestens zwei der Reste Alkoxyreste sind,
als Additiv enthalten sind,
wobei das organische Grundgerüst ausgewählt ist aus der Gruppe umfassend Polyamide, Polyether, Polyester, Polycarbonate, Polyethylene, Polybutylene, Polystyrole, Polypropylene, Polyacrylate, Poly(meth)acrylate, Polyoxymethylenhomo- und -copolymere, Polyurethane, Vinylbutyrate, Vinylpolymere, Reyon, Ethylencopolymere, Ethylenacrylsäurecopolymere, Ethylenacrylatcopolymere, organische Kautschuke.

Unter einem silanvernetzender Kleb- oder Dichtstoff ist ein Kleb- bzw. Dichtstoff bzw. eine Kleb- oder Dichtstoffmasse zu verstehen, der / die als Bindemittel mindestens ein alkoxysilyl- und / oder acyloxysilylterminiertes Polymer enthält. Erfindungsgemäß weist das Polymer ein organisches Grundgerüst auf, d.h. enthält Kohlenstoffatome in der Hauptkette. Die als Additiv verwendete Verbindung der Formel (I) wird als N-Silylalkylamid bezeichnet.

Nach einer bevorzugten Ausführungsform ist R² ein Wasserstoff-, Butyl-, Cyclohexyl-, Phenyl- oder ein substituierter oder unsubstituierter Benzylrest.

Der zweibindige Rest -(R⁴)ₙ- ist vorzugsweise ein Alkylenrest mit 1 - 8 C-Atomen, bevorzugt ein Alkylenrest mit 1 bis 4 C-Atomen, insbesondere ein Methylen-, Ethylen-, Propylen- oder Isobutylenrest. Besonders bevorzugt ist ein Propylenrest.

R³ ist vorzugsweise ein Methoxy-, Ethoxy- und / oder Alkylrest mit 1 bis 24 C-Atomen. Besonders bevorzugt ist es, wenn R³ durch einen oder zwei Ethoxyreste und einen Alkylrest mit 1 bis 24 C-Atomen oder durch drei Ethoxyreste repräsentiert wird. Besonders bevorzugt ist es wenn die Gruppe -Si(R³)₃ eine Dialkoxyalkylsilylgruppe, insbesondere eine Dimethoxyalkyl- oder Diethoxyalkylsilylgruppe, oder eine Trialkoxysilylgruppe, inbesondere eine Trimethoxy- oder Triethoxysilylgruppe, ist. Beispiele sind Dimethoxymethylsilyl-, Dimethoxyethylsilyl-, Diethoxymethylsilyl-, Diethoxyethylsilyl-, Trimethoxysilyl- und Triethoxysilylgruppen.

Das Additiv der Formel (I) besitzt eine sehr niedrige Viskosität, d. h. es verbessert die Festigkeit und die Dehnung, trägt aber zu einem Viskositätsaufbau nicht bei. Bei höherviskosen Systemen ist dies insbesondere vorteilhaft, da so weniger Weichmacher und/oder Lösemittel zum Ausgleich des Viskositätsaufbaus eingesetzt werden müssen oder gar darauf verzichtet werden kann.

R¹ ist ein geradkettiger bzw. gradliniger oder verzweigter, substituierter oder unsubstituierter Alkylrest mit 1 bis 24 C-Atomen.
Vorzugsweise ist R¹ ein Alkylrest mit 10 bis 16 C-Atomen, der OH- oder Expoxygruppen enthalten kann. Besonders bevorzugt sind Reste mit 12 bis 14 C-Atomen. Dies ist vorteilhaft, da die Additive mit R¹ ≤ C₁₆ flüssig und gut einarbeitbar sind. Additive mit R¹ > C₁₆ sind wachsartig. Dadurch sind sie schlechter verarbeitbar und tragen eher zum Aufbau einer unerwünscht hohen Viskosität im Bindemittel bei.

Setzt man Verbindungen ein, bei denen R¹ eine längere Kette darstellt, erreicht man den gewünschten Additiveffekt durch Stoffe, die absolut weniger Silan aufweisen. Dadurch ist absolut die Zahl an zusätzlichen Netzwerkpunkten (-> Netzwerkdichte) geringer, die zu einer Erhöhung der Viskosität, Festigkeit, Sprödheit beitragen. Bei geringerer Zahl der Netzwerkpunkte können elastischere und dehnbarere Kleb- oder Dichtstoffe erhalten werden.

Die N-Silylalkylamide als solche sind bekannt. Beispielsweise werden in der WO 2004/037868 A1 foto- und feuchtigkeitshärtende Silikonmischungen beschrieben, die α-Silane enthalten. In dieser Patentanmeldung fungieren Organosilanole als Bindemittel. Die Aufgabe dieser Patentschrift ist die Bereitstellung von rasch härtenden Systemen.

In den US Patenten US 4,826,915, 4,695,603 und 4,788,310 werden Silikon-Zusammensetzungen beschrieben, die N-Silylalkylamide enthalten. Diese Systeme weisen Polyorganosiloxane als Backbone auf.

SU 555 104 A beschreibt die Herstellung von N-Silylalkylamiden und deren Verwendung als Intermediate in filmbildenden Beschichtungen, modifzierten Polymeren und als biologisch aktive Verbindungen.

Das als Bindemittel in dem erfindungsgemäßen Kleb- oder Dichtstoff enthaltene Polymer entspricht vorteilhaft der allgemeinen Formel (II) 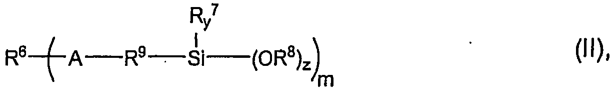 in der R⁶ das organische Grundgerüst ist,
A eine zweibindige Bindegruppe, insbesondere eine Amid-, Carboxy-, Carbamat-, Carbonat-, Ureido-, Urethan-, Harnstoff-, Carbamoyl- oder Sulfonatgruppe bzw. - bindung, ein Sauerstoffatom, ein Stickstoffatom, ein Schwefelatom oder eine Methylengruppe, bedeutet,
R⁷ ein Alkylrest mit 1 bis 8 C-Atomen, insbesondere ein Alkylrest mit 1 bis 4 C-Atomen, oder OR⁸ ist,
R⁸ ein Alkylrest mit 1 bis 8 C-Atomen, insbesondere ein Alkylrest mit 1 bis 4 C-Atomen, oder ein Acylrest mit 1 bis 8 C-Atomen, insbesondere ein Acylrest mit 1 bis 4 C-Atomen, ist,
R⁹ ein gradkettiger oder verzweigter, substituierter oder unsubstituierter Alkylenrest mit 1 bis 8 C-Atomen ist,
y = 0 bis 2 ist,
z = 3 - y ist und
m = 1 bis 10000 ist,
wobei die Silylreste -A-R⁹-Si(R⁷)_{y}(OR⁸)_{z} gleich oder verschieden sein können und im Falle von mehreren Resten R⁷ bzw. R⁸ diese jeweils gleich oder verschieden sein können.

Dabei versteht man unter einer zweibindigen oder bivalenten Bindegruppe A eine zweibindige chemische Gruppe, die das Polymergerüst bzw. organische Grundgerüst R⁶ des alkoxy- und/oder acyloxysilanterminierten Polymers mit dem Rest R⁹ der Endgruppe verknüpft. Die zweibindige Bindegruppe A kann beispielsweise bei der Herstellung des alkoxy- und / oder acyloxysilanterminierten Polymers ausgebildet werden, z.B. als Urethangruppe durch die Reaktion eines mit Hydroxygruppen funktionalisierten Polyethers mit einem isocyanatofunktionellen Alkoxysilan oder umgekehrt durch Reaktion eines Polymer, welches endständige Isocyanatgruppen aufweist, mit einem hydroxyfuntionellen Alkoxysilan, also einem terminale Hydroxygruppen aufweisenden Alkoxysilan. Auf ähnliche Weise können Harnstoffgruppen erhalten werden, wenn eine terminale primäre oder sekundäre Aminogruppe - entweder am Alkoxysilan oder am Polymer - eingesetzt wird, die mit einer im jeweiligen Reaktionspartner vorhandenen terminalen Isocyanatgruppe reagiert. Das bedeutet, dass entweder ein aminofunktionelles Alkoxysilan mit einem terminale Isocyanatgruppen aufweisenden Polymer oder ein terminal mit einer Aminogruppe substituiertes Polymer mit einem isocyanatofunktionellen Alkoxysilan zur Reaktion gebracht wird.

Die bivalente Bindegruppe A kann von im zugrunde gelegten Polymergerüst auftretenden Strukturmerkmalen sowohl unterscheidbar als auch nicht unterscheidbar sein. Letzteres liegt beispielsweise vor, wenn sie mit den Verknüpfungspunkten der Wiederholungseinheiten des Polymergerüsts identisch ist.

In einer bevorzugten Ausführungsform der erfindungsgemäßen Zusammensetzung ist A eine Amid-, Carbamat-, Harnstoff-, Imino-, Carboxy- bzw. Oxycarbonyl-, Carbamoyl-, Amidino-, Carbonat-, Ureido-, Urethan-, Sulfonat- oder Sulfinatgruppe oder ein Sauerstoff-, Stickstoff- oder Schwefelatom oder eine Methylengruppe.

Besonders bevorzugt als Bindegruppe sind Urethan- und Harnstoffgruppen. Urethan- und Harnstoffgruppen erhöhen vorteilhaft die Festigkeit der Polymerketten und des gesamten vernetzten Polymers, weil sie Wasserstoffbrücken ausbilden können.

Der Rest R⁹ ist ein zweibindiger bzw. bivalenter, ggf. ein Heteroatom enthaltender Kohlenwasserstoffrest mit 1 bis 8 Kohlenstoffatomen. Als Heteroatom kann beispielsweise Sauerstoff (O) oder Stickstoff (N) enthalten sein. Bei dem Kohlenwasserstoffrest kann es sich um einen geradkettigen oder verzweigten, substituierten oder unsubstituierten Alkylenrest handeln, wobei der Alkylenrest beispielsweise auch cyclisch sein kann. Bevorzugt Ist R⁹ ein Alkylenrest mit 1 bis 4 C-Atomen, insbesondere ein Methylen-, Ethylen-, Propylen- oder Isobutylenrest. Besonders bevorzugt ist ein Propylenrest.

R⁷ und R⁸ sind vorzugsweise Alkylreste mit 1.- 4 C-Atomen, insbesondere Methyl- oder Ethylreste, wobei R⁷ bzw. R⁸ jeweils gleich oder verschieden sein können. Besonders bevorzugt ist es wenn die Gruppe -Si(R⁷)_{y}(OR⁸)_{z} eine Dialkoxyalkylsilylgruppe, insbesondere eine Dimethoxyalkyl- oder Diethoxyalkylsilylgruppe, oder eine Trialkoxysilylgruppe, inbesondere eine Trimethoxy- oder Triethoxysilylgruppe, ist. Beispiele sind Dimethoxymethylsilyl-, Dimethoxyethylsilyl-, Diethoxymethylsilyl-, Diethoxyethylsilyl-, Trimethoxysilyl- und Triethoxysilylgruppen.

m ist bevorzugt 2 oder 3, insbesondere 2.

Das organische Grundgerüst R⁶ des in dem erfindungsgemäßen silanvernetzenden Kleb- oder Dichtstoff enthaltenen Polymers ist ausgewählt aus der Gruppe umfassend Polyamide, Polyether, Polyester, wie z.B. Polyethylenterephthalat und Polybutylenterephthalat, Polycarbonate, Polyethylene, Polybutylene, Polystyrole, Polypropylene, Polyacrylate und Poly(meth)acrylate, z.B. Homo- und Copolymere von Maleinsäure, Acrylsäure, Acrylaten, Methacrylaten, Acrylamiden, ihren Salzen und dergleichen, sowie in EP 1 271 670 A1 beschriebene Acrylate, Polyoxymethylenhomo- und copolymere, Polyurethane, Vinylbutyrate, Vinylpolymere, z.B. Vinylchlorid und/oder Vinylacetat enthaltende Polymere, Reyon, Ethylencopolymere wie z.B. Ethylenvinylacetatcopolymere, Ethylenacrylsäurecopolymere, Ethylenacrylatcopolymere, organische Kautschuke, Mischungen verschiedener silylierter Polymere, wobei das Grundgerüst auch Silylgruppen enthalten kann. Beispiele schließen Polyether auf Basis von Ethylenoxid, Propylenoxid und Tetrahydrofuran, Polyacrylat und Polymethacrylat ein. Von den genannten polymeren Grundgerüsten werden Polyether und Polyurethane bevorzugt. Besonders bevorzugt sind Polyether auf der Basis von Polyethylenoxid und / oder Polypropylenoxid, insbesondere Polypropylenglykol. Polymere, die Polyether als Grundgerüst enthalten, weisen im Polymerrückgrat eine flexible und elastische Struktur auf. Damit lassen sich Zusammensetzungen herstellen, die ausgezeichnete elastische Eigenschaften aufweisen. Dabei sind Polyether nicht nur in ihrem Grundgerüst flexibel, sondern gleichzeitig beständig. So werden sie beispielsweise von Wasser und Bakterien nicht angegriffen oder zersetzt und zeichnen sich daher durch eine relative Stabilität gegenüber Umwelteinflüssen (im Gegensatz zu Polyestern) aus. Zu dem in dem erfindungsgemäßen silanvernetzenden Kleb- oder Dichtstoff enthaltenen Polymer, bestehend aus einem organischen Grundgerüst mit Kohlenstoffatomen in der Hauptkette gehören keine anorganischen Polymere wie z.B. Polyphosphate, Polysilane, Polysiloxane, Poylsulfide. Vorteil der erfindungsgemäßen Ausgestaltung, insbesondere der Verwendung von Polyurethanen und Polyethern, gegenüber silikonbasierten Bindemitteln oder anderen anorganischen Polymeren sind die gute Anhaftung auf verschiedensten Substraten, gute Überstreichbarkeit, keine Kontamination des Untergrundes mit Silikonen, sowie die hohe Elastizität der Gerüststruktur.

Nach einer weiteren bevorzugten Ausführungsform des erfindungsgemäßen silanvernetzenden Kleb- oder Dichtstoffs beträgt das Molekulargewicht Mₙ des Polymergerüsts R⁶ zwischen 3.000 und 50.000 g/mol. Weitere besonders bevorzugte Molekulargewichtsbereiche sind 5.000 bis 25.000 g/mol, ganz besonders bevorzugt sind 8.000 bis 19.000 g/mol, insbesondere 12.000 bis 18.000 oder 15.000 bis 16.000 g/mol.

Diese Molekulargewichte sind besonders vorteilhaft, da Zusammensetzungen mit diesen Molekulargewichten Viskositäten aufweisen, die eine leichte Verarbeitbarkeit ermöglichen.

Ganz besonders bevorzugt werden Polyoxyalkylene, insbesondere Polyethylenoxide oder Polypropylenoxide, eingesetzt, die eine Polydispersität PD von weniger als 2, bevorzugt weniger als 1,5 aufweisen.

Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermationschromatographie (GPC, auch: SEC) bestimmt werden. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Besonders vorteilhafte viskoelastische Eigenschaften lassen sich erreichen, wenn man als polymere Grundgerüste Polyoxyalkylenpolymere, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Diese Polyoxyalkylenpolymere zeichnen sich durch eine besonders enge Molmassenverteilung, durch eine hohe mittlere Molmasse und durch eine sehr niedrige Zahl an Doppelbindungen an den Enden der Polymerketten aus.
Solche Polyoxyalkylenpolymere haben eine Polydispersität PD (M_{w}/Mₙ) von höchstens 1,7.
Besonders bevorzugte organische Grundgerüste sind beispielsweise Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14.
In einer bevorzugten Ausführungsform der Erfindung weisen diese Polyether ein mittleres Molekulargewicht (Mₙ) von etwa 5.000 bis etwa 30.000 g/mol auf, insbesondere etwa 6.000 bis etwa 25.000. Besonders bevorzugt sind Polyether mit mittleren Molekulargewichten von etwa 10.000 bis etwa 22.000, insbesondere mit mittleren Molekulargewichten von etwa 12.000 bis etwa 18.000 g/mol.

Erfindungsgemäß können ebenso Mischungen mehrerer Polymere mit verschiedenen Molekulargewichten Mₙ statt reiner Polymere eingesetzt werden. In diesem Fall sind die Ausführungen zur Polydispersität und dem Molekulargewicht Mₙ so zu verstehen, dass vorteilhafterweise jedes der Mischung zugrunde gelegte Polymer eine Polydispersität im bevorzugten Bereich aufweist, die bevorzugten Molekulargewichtsbereiche sich aber auf den gemittelten Wert über die gesamte Mischung der eingesetzten Polymeren beziehen.

Die als Additiv fungierenden Verbindungen der Formel (I) können hergestellt werden aus einem Ester der Formel (III) 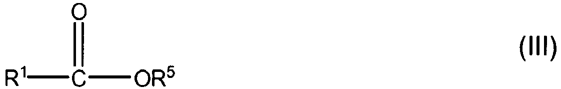 wobei
R¹ ein gradkettiger oder verzweigter, substituierter oder unsubstituierter Alkylrest mit 1 bis 24 C-Atomen, bevorzugt 10 bis 16 C-Atomen, besonders bevorzugt 12 bis 14 C-Atomen, der OH- oder Epoxygruppen enthalten kann, ist und R⁵ ein Methyl- oder Ethylrest ist,
und einem Silan der Formel (IV) 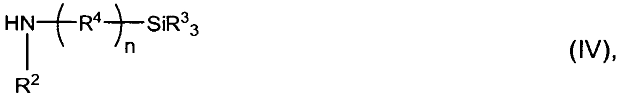 wobei
R² ein Wasserstoff- oder ein geradkettiger oder verzweigter Kohlenwasserstoffrest mit 1 bis 10 C-Atomen, insbesondere ein Wasserstoff-, Butyl-, Cyclohexyl- oder Phenylrest oder ein substituierter oder unsubstituierter Benzylrest ist,
R³ ein Alkoxyrest mit 1 bis 8 C-Atomen oder Alkylrest mit 1 bis 24 C-Atomen, insbesondere ein Methoxy-, Ethoxy- oder Alkylrest mit 1 bis 24 C-Atomen, ist,
R⁴ ein geradkettiger bzw. gradliniger oder verzweigter Alkylenrest mit 1 bis 8 C-Atomen, worin C-Atome durch Stickstoff- oder Sauerstoffatome substituiert sein können, ist,
n = 1 bis 8, bevorzugt n = 3 bis 8, ist,
wobei die Reste R³ jeweils gleich oder verschieden sein können und mindestens zwei der Reste Alkoxyreste sind.

Im übrigen entsprechen die Definitionen der Reste und Indices den vorstehend bereits beschriebenen Ausführungsformen.

Da die Umsetzung vorteilhaft in moderatem Vakuum durchgeführt wird, um den bei der Umsetzung entstehenden Alkohol, insbesondere Ethanol oder Methanol, abzuziehen, ist es vorteilhaft, wenn der Siedepunkt der Ester ein gewisses Minimum überschreitet, um nicht mit dem Nebenprodukt (Alkohol) abdestilliert zu werden.

Unter den veresterten Säuren nach Formel (III) werden Säuren verstanden, die eine oder mehrere veresterte Carboxyl-Gruppen (-COOH) enthalten. Die Carboxyl-Gruppen können mit gesättigten, ungesättigten und/oder verzweigten Alkyl-Resten vorzugsweise mit mehr als 6 C-Atomen verbunden sein. Sie können weitere funktionelle Gruppen wie z.B. Hydroxylgruppen, Ketogruppen oder Epoxygruppen enthalten.

Bevorzugt leiten sich die erfindungsgemäßen veresterten Fettsäuren aus natürlichen Fetten und Ölen ab wie z.B. von Rapsöl, Sonnenblumenöl, Sojaöl, Leinöl, Ricinusöl, Kokosnussöl, Palmöl, Palmkernöl und Rindertalg, die gegebenenfalls einer weiteren Derivatisierung (Hydrierung, Epoxidierung, Dimerisierung, Dehydratisierung, Konjugierung) unterzogen worden sind. Als konkrete Bespiele seien genannt: Palmitoleinsäure, Ölsäure, Elaidinsäure, Petroselinsäure, Eurcasäure, Linolsäure, Linolensäure, Gadoleinsäure, Ricinolsäure, 12-Hydroxystearinsäure, Epoxystearinsäure, Isostearinsäure, Erucasäure, Dimerfettsäure und Trimerfettsäure. Auch veresterte Konjuensäuren wie z.B. Sorbinsäure, 2,4-Decadiensäure, 2,4-Dodecadiensäure, 10,12-Octadecadiensäure, 9,11-Octadecadiensäure, 9-Hydroxy-10,10-octadecadiensäure, 13-Hydroxy-9,11-octadecadiensäure, 9,14-Dihydroxy-10,12-octadecadiensäure, 9,12,14-Octadecatriensäure, 8,10,12-Octadecatriensäure, Elaeostearinsäure, Licansäure, Kamolensäure, Parinarsäure, Isansäure, Isanolsäure, Ximeninsäure, Matricariasäure, Lachnophyllsäure, Mycomycinsäure sind verwendbar.

Auch petrochemisch hergestellte Säuren, jeweils verestert, wie Octansäure, 2-Ethylhexansäure, Butyloctansäure, Hexyldecansäure sind verwendbar. Derartige Fettsäuren sind z.B. von der Fa. Sasol unter dem Markennamen Isocarb^{®} erhältlich.

Vorzugsweise werden die Verbindungen der Formel (IV) ausgewählt aus der Gruppe bestehend aus N-Cyclohexylaminomethylmethyldiethoxysilan, N-Cyclohexylaminomethyltriethoxysilan, N-Phenylaminomethyltrimethoxysilan, N-(2-Aminoethyl)-3-aminopropyltrimethoxysilan, N-(2-Aminoethyl)-3-aminopropyltrimethoxysilan, N-Cyclohexyl-3-aminopropyltrimethoxysilan, 3-Aminopropyltriethoxysilan, N-(2-Aminoethyl)-3-aminopropylmethyldimethoxysilan, 3-Aminopropyltrimethoxysilan, 3-Ureidopropyltrimethoxysilan, Vinylbenzylaminoethylaminopropyltrimethoxysilan, Aminopropyltriethoxysilan, Aminoethylaminopropyltrimethoxysilan, Aminoethylaminopropyltrimethoxysilan, Aminoethylaminopropyltrimethoxysilan wie z.B. DOW CORNING^{®} Z-6121 SILANE von Dow, Aminoethylaminopropylsilantriolhomopolymer wie z.B. DOW CORNING^{®} Z-6137 SILANE von Dow, Bis(3-triethoxysilylpropyl)amin, Bis(3-trimethoxysilylpropyl)amin, Oligoarninosilane wie z.B. Dynasylan^{®} 1133 der Fa. Degussa, Aminosilankompositionen wie z.B. Dynasylan^{®} 1204, Dynasylan^{®} AMEO-T, Dynasylan^{®} SIVO 210, Dynasylin^{®} DAMO-M, Dynasylin^{®} DAMO-T der Fa. Degussa, 3-Aminopropylmethyldiethoxysilan, 3-Aminopropylmethyldiethoxysilan-Formulierungen wie z.B. Dynasylan^{®} 1506 der Fa. Degussa, 3-Aminopropyltriethoxysilan, 3-Aminopropyltrimethoxysilan, wässrige Siloxane, VOC-frei, d.h. frei von flüchtigen organischen Verbindungen (volatile organic compounds), wie z.B. Dynasylan^{®} HYDROSIL 1151, Dynasylan^{®} HYDROSIL 2627, Dynasylan^{®} HYDROSIL 2909, Dynasylan^{®} HYDROSIL 2929, Dynasylan^{®} HYDROSIL 2776 der Fa. Degussa, triaminofunktionelle Propyltrimethoxysilane wie z.B. Dynasylan^{®} TRIAMO der Fa. Degussa, Oligosiloxane wie z.B. Dynasylan^{®} 1146 der Fa. Degussa, N-(n-Butyl)-3-aminopropyltrimethoxysilan, kationisches benzylaminofunktionelles Silan-Hydrochlorid wie z.B. Dynasylan^{®} 1161 der Fa. Degussa, 2-Aminoethyl-3-aminopropylmethyldimethoxysilan, 2-Aminoethyl-3-aminopropyltrimethoxysilan, gamma-Aminopropyltriethoxysilan, modifizierte Aminoorganosilane wie z.B. Silquest^{®} A-1108 von GE Silicones, gamma-Aminopropyltrimethoxysilan, N-beta-(Aminoethyl)-gamma-aminopropyltrimethoxysilan, modifizierte Aminoorganosilane wie z.B. Silquest^{®} A-1126 oder A-1128 von GE Silicones, triaminofunktionelle Silane wie z.B. Silquest^{®} A-1130 von GE Silicones, bis-(gamma-Trimethoxysilylpropyl)amin, Polyazamidsilan wie z.B. Silquest^{®} A-1387 von GE Silicones, Delta-aminoneohexyltrimethoxysilan, N-beta-(aminoethyl)-gamma-aminopropylmethyldimethoxysilan, Deltaaminoneohexylmethyldimethoxysilan und N-Phenyl-gamma-aminopropyltrimethoxysilan.

Vorzugsweise beträgt das Molverhältnis der Verbindungen der Formel (III) zu Verbindungen der Formel (IV) 1:10 bis 2:1. Besonders bevorzugt beträgt das Molverhältnis 7:10 bis 7:5.

Der Anteil an Verbindungen der Formel (I) beträgt 0,1 bis 50 Massen-% am Gesamtbindemittelgehalt. Bevorzugt beträgt der Anteil 5 bis 30 Massen-%. Besonders bevorzugt beträgt der Anteil 9 bis 11 Massen-% am Gesamtbindemittelgehalt. Im Bereich von 0,1 bis 50 Massen-% werden die Bindemitteleigenschaften durch Zugabe des Additivs nicht negativ verändert.

Der Gesamtbindemittelgehalt des Kleb- oder Dichtstoffes ist der Gesamtgehalt an Bindemitteln der vorliegenden Erfindung.

Nach einer bevorzugten Ausführungsform enthält der erfindungsgemäße Kleb- oder Dichtstoff ein Polymer, ein Vinylsilan, ein Aminosilan, ein Additiv der Formel (I) und einen Katalysator sowie ggf. weitere Additive. Das bedeutet, dass der erfindungsgemäße Kleb- oder Dichtstoff neben dem Polymer und dem Additiv der Formel (I) einen Katalysator und weitere Additive, wie z.B. ein Vinylsilan oder ein Aminosilan, enthalten kann.

Das Aminosilan kann ein Silan der Formel (IV) sein, das vorteilhaft als Haftvermittler wirken kann.

Die weiteren Additive sind Hilfs- und Zusatzstoffe, die den erfindungsgemäßen Kleb- und Dichtstoffen beispielsweise verbesserte elastische Eigenschaften, verbesserte Rückstellfähigkeit, ausreichend lange Verarbeitungszeit, schnelle Durchhärtungsgeschwindigkeit und geringe Restklebrigkeit verleihen. Zu diesen Hilfs- und Zusatzstoffen gehören Haftvermittler und Weichmacher sowie Füllstoffe. Darüber hinaus können die Zusammensetzungen als weitere Additive Stabilisatoren, Antioxidantien, Reaktivverdünner, Trockenmittel, UV-Stabilisatoren, Alterungsschutzmittel, rheologische Hilfsmittel, Farbpigmente oder Farbpasten, Fungizide, Flammschutzmittel und/oder gegebenenfalls auch in geringem Umfang Lösungsmittel enthalten.

Als Katalysatoren zur Steuerung der Härtungsgeschwindigkeit des erfindungsgemäßen Kleb- und Dichtstoffs sind beispielsweise metallorganische Verbindungen wie Eisen- oder Zinnverbindungen geeignet, insbesondere die 1,3-Dicarbonylverbindungen des Eisens oder des zwei- bzw. vierwertigen Zinns, die Zinn-(II)-carboxylate beziehungsweise die Dialkylzinn-(IV)-Dicarboxylate oder die entsprechenden Dialkoxylate, z.B. Dibutylzinndilaurat, Dibutylzinndiacetat, Dioctylzinndiacetat, Dibutylzinnmaleat, Zinn(II)octoat, Zinn(II)phenolat oder die Acetylacetonate des zwei- bzw. vierwertigen Zinns. Ferner kann man auch Alkyltitanate, Siliziumorganische Titanverbindungen oder Bismut-tris-2-ethylhexanoat, saure Verbindungen wie Phosphorsäure, p-Toluolsulfonsäure oder Phthalsäure, aliphatische Amine wie Butyl-, Hexyl-, Octyl- Decyl- oder Laurylamin, aliphatische Diamine wie z.B. Ethylendiamin, Hexyldiamin oder auch aliphatische Polyamine wie Diethylentriamin, Triethylentetramin, Tetraethylenpentamin, heterocyklische N-Verbindungen, z.B. Piperidin, Piperazin, aromatische Amine wie m-Phenylendiamin, Ethanolamin, Triethylamin und andere Härtungskatalysatoren für Epoxide einsetzen.

Ferner eignen sich folgende Zinnverbindungen: Di(n-butyl)zinn(IV)-di(methylmaleat), Di(n-butyl)zinn(IV)-di(butylmaleat), Di(n-octyl)zinn(IV)-di(methylmaleat), Di(n-octyl)zinn(IV)-di(butylmaleat), Di(n-octyl)zinn(IV)-di(iso-octylmaleat), Di(n-butyl)zinn(IV)sulfid, Di(n-butyl)zinn(IV)oxid, Di(n-octyl)zinn(IV)oxid, (n-Butyl)₂Sn(SCH₂COO), (n-Octyl)₂Sn(SCH₂COO), (n-Octyl)₂Sn(SCH₂CH₂COO), (n-Octyl)₂Sn(SCH₂CH₂COOCH₂CH₂OCOCH₂S), (n-Butyl)₂Sn(SCH₂COO-i-C₈H₁₇)₂, (n-Octyl)₂Sn(SCH₂COO-i-C₈H₁₇)₂, (n-Octyl)₂Sn(SCH₂COO-n-C₈H₁₇)₂.

Chelatbildende Zinnorganyle können ebenso eingesetzt werden, z.B. Di(n-butyl)zinn-(IV)-di(acetylacetonat), Di(n-octyl)zinn-(IV)-di(acetylacetonat), (n-octyl)(n-butyl)-zinn-(IV)-di(acetylacetonat).

Besonders bevorzugt sind auch zinnfreie Katalysatoren. So kann man als Härtungskatalysatoren ferner Borhalogenide wie Bortrifluorid, Bortrichlorid, Bortribromid, Bortrijodid oder gemischte Borhalogenide einsetzen. Besonders bevorzugt sind Bortrifluoridkomplexe wie z.B. Bortrifluorid-diethyletherat (CAS-Nr. [109-63-7]), die als Flüssigkeiten einfacher handhabbar sind als die gasförmigen Borhalogenide.

Ferner können vorzugsweise als Katalysatoren Titan-, Aluminium- und Zirkonverbindungen oder Mischungen aus einem oder mehreren Katalysatoren aus einer oder mehrerer der gerade erwähnten Gruppen eingesetzt werden. Diese Katalysatoren eignen sich als Härtungskatalysatoren für die Alkoxysilanpolymere. Einerseits kann man so den Einsatz von Zinnverbindungen vermeiden, zum anderen kann man so eine bessere Adhäsion zu normalerweise schlecht anhaftenden organischen Oberflächen wie z. B. Acrylaten verbessern. Unter den Titan-, Aluminium- und Zirkonkatalysatoren werden die Titankatalysatoren bevorzugt eingesetzt, da mit ihnen die besten Härtungsergebnisse erzielt werden.

Als Titankatalysatoren eignen sich Verbindungen, die Hydroxygruppen und/oder substituierte oder unsubstituierte Alkoxygruppen aufweisen, also Titanalkoxide der allgemeinen Formel

Ti (OR^{x})₄,

wobei R^{x} eine organische Gruppe, vorzugsweise eine substituierte oder unsubstituierte Kohlenwasserstoffgruppe mit 1 bis 20 C-Atomen und die 4 Alkoxygruppen -OR^{x} gleich oder verschieden sind. Ferner können ein oder mehrere der Reste -OR^{x} durch Acyloxygruppen -OCOR^{x} ersetzt werden.

Ebenso eigenen sich als Titankatalysatoren Titanalkoxide, bei denen ein oder mehrere Alkoxygruppen durch Halogenatome ersetzt sind.

Als Titankatalysatoren kann man z.B. folgende gemischt- oder nicht-gemischtsubstituierte Titanalkoxide einsetzen: Tetramethoxytitan, Tetraethoxytitan, Tetraallyloxytitan, Tetra-n-Propoxytitan, Tetraisopropoxytitan, Tetra-n-butoxytitan, Tetraisobutoxytitan, Tetra-(2-butoxy)titan, Tetra(t-butoxy)titan, Tetrapentoxy(titan), Tetracyclopentoxytitan, Tetrahexoxytitan, Tetracyclohexoxytitan, Tetrabenzoxytitan, Tetraoctoxytitan, Tetrakis(2-ethylhexoxy)-titan, Tetradecoxytitan, Tetradodecoxytitan, Tetrastearoxytitan, Tetrabutoxytitan-Dimer, Tetrakis(8-hydroxyoctoxy)titan, Titandiisopropoxy-bis(2-ethyl-1,3-hexandiolat), Titan- bis(2-ethylhexyloxy)bis(2-ethyl-1,3-hexanediolate), Tetrakis(2-chloroethoxy)titan, Tetrakis(2-bromoethoxy)titan, Tetrakis(2-methoxyethoxy)titan, Tetrakis(2-ethoxyethoxy)titan, Butoxy-Trimethoxytitan, Dibutoxydimethoxytitan, Butoxytriethoxytitan, Dibutoxydiethoxytitan, Butoxytriisopropoxytitan, Dibutoxydiisopropoxytitan, Tetraphenoxybutan, Tetrakis(o-chlorophenoxy)titan, Tetrakis(m-nitrophenoxy)titan, Tetrakis(p-methylphenoxy)titan, Tetrakis(trimethylsiloxy)titan. Ferner kann man Titanacylate einsetzen: Triisopropoxytitan, Triisopropoxytitanmethacrylat, Diisopropoxytitandimethacrylat, Isopropoxytitantrimethacrylat, Triisopropoxytitanhexanoat, Triisopropoxytitanstearat und ähnliche.

Als halogenierte Titankatalysatoren können z.B. folgende Verbindungen eingesetzt werden: Triisopropoxytitanchlorid, Diisopropoxytitandichlorid, Isopropoxytitantrichlorid, Triisopropoxytitanbromid, Triisopropoxytitanfluorid, Triethoxytitanchlorid, Tributoxytitanchlorid.

Ferner kann man Titanchelatkomplexe einsetzen: Dimethoxytitan-bis(ethylacetoacetat), Dimethoxytitanbis(acetylacetonat), Diethoxytitanbis(ethylacetoacetat), Diethoxytitanbis(acetylacetonat), Diisopropoxytitan-bis(ethylacetoacetat), Diisopropoxytitanbis(methylacetoacetat), Diisopropoxytitan-bis(t-butylacetoacetat), Diisopropoxytitanbis(methyl-3-oxo-4,4-dimethylhexanoat), Düsopropoxytitanbis(ethyl-3-oxo-4,4,4-trifluorobutanoat), Diisopropoxytitanbis(acetylacetonat), Diisopropoxytitanbis(2,2,6,6-tetramethyl-3,5-heptanedionat), Di(n-butoxy)titanbis(ethylacetoacetat), Di(n-butoxy)titanbis(acetylacetonat), Diisobutoxytitanbis(ethylacetoacetat), Diisobutoxytitanbis(acetylacetonat), Di(t-butoxy)titanbis(ethylacetoacetat), Di(t-butoxy)titanbis(acetylacetonat), Di(2-ethylhexoxy)titanbis(ethylacetoacetat), Di(2-ethylhexoxy)titanbis(acetylacetonat), Bis(1-methoxy-2-propoxy)titanbis(ethylacetoacetat), Bis(3-oxo-2-butoxy)-titanbis(ethylacetoacetat), Bis(3-diethylaminopropoxy)titanbis(ethylacetoacetat), Triisopropoxytitan(ethylacetoacetat), Triisopropoxytitan(diethylmalonat), Triisopropoxytitan(allylacetoacetat), Triisopropoxytitan(methacryloxyethylacetoacetat), 1,2-Dioxyethantitanbis(ethylacetoacetat), 1,3-Dioxypropantitanbis(ethylacetoacetat), 2,4-Dioxypentantitanbis(ethylacetoacetat), 2,4-Dimethyl-2,4-Dioxypentantitanbis(ethylacetoacetat), Diisopropoxytitanbis(triethanolaminat), Tetrakis(ethylacetoacetato)titan, Tetrakis(acetylacetonato)titan, Bis(trimethylsiloxy)titanbis(ethylacetoacetat), Bis(trimethylsiloxy)titanbis(acetylacetonat).

Bevorzugt werden folgende Titanchelatkomplexe eingesetzt, da sie kommerziell erhältlich sind und eine hohe katalytische Aktivität aufweisen: Diethoxytitanbis(ethylacetoacetat), Diethoxytitanbis(acetylacetonat), Diisopropoxytitanbis(ethylacetoacetat), Diisopropoxytitanbis(acetylacetonat), Dibutoxytitan-bis(ethylacetoacetat) und Dibutoxytitanbis(acetylacetonat). Besonders bevorzugt sind Diethoxytitanbis(ethylacetoacetat), Diisopropoxytitan(ethylacetoacetat) und Dibutoxytitanbis(ethylacetoacetat), ganz besonders bevorzugt ist Diisopropoxytitanbis(ethylacetoacetat).

Ferner kann man auch folgende Titankatalysatoren einsetzen: Isopropoxytitan-tris(dioctylphosphat), Isopropoxytitantris(dodecylbenzylsulfonat), Dihydroxytitanbislactat.

Man kann auch Aluminiumkatalysatoren als Härtungskatalysatoren einsetzen, z.B. Aluminiumalkoxide

Al(OR^{x})₃,

wobei R^{x} eine organische Gruppe, bevorzugt ein substituierter oder unsubstituierter Kohlenwasserstoffrest mit 1 bis 20 C-Atomen bedeutet und die drei Reste R^{x} gleich oder verschieden sind.

Auch bei den Aluminiumalkoxide können ein oder mehrere der Alkoxyreste auch durch Acyloxyreste -OC(O)R^{x} ersetzt sein.

Ferner kann man Aluminiumalkoxide einsetzen, bei denen ein oder mehrere Alkoxyreste durch Halogengruppen ersetzt sind.

Von den beschriebenen Aluminiumkatalysatoren sind die reinen Aluminiumalkoholate in Hinblick auf ihre Stabilität gegenüber Feuchtigkeit und die Härtbarkeit der Mischungen, denen sie zugesetzt werden, bevorzugt. Außerdem werden Aluminium-Chelatkomplexe bevorzugt.

Als Aluminiumalkoxide können beispielsweise folgende Verbindungen eingesetzt werden: Trimethoxyaluminium, Triethoxyaluminium, Triallyloxyaluminium, Tri(n-propoxy) aluminium, Triisopropoxyaluminium, Tri(n-butoxy)aluminium, Triisobutoxyaluminium, Tri(sec-butoxy) aluminium, Tri(t-butoxy)aluminium, Tri(n-pentoxy) aluminium, Tricyclopentoxyaluminium, Trihexoxyaluminium, Tricyclohexoxyaluminium, Tribenzoxyaluminium, Trioctoxyaluminium, Tris(2-ethylhexoxy) aluminium, Tridecoxyaluminium, Tridodecoxyaluminium, Tristearoxyaluminium, dimeres Tributoxyaluminium, Tris(8-hydroxyoctoxy)aluminium, Isopropoxyaluminiumbis(2-ethyl-1,3-hexandiolat), Diisopropoxyaluminium(2-ethyl-1,3-hexandiolat), (2-ethylhexoxy)aluminiumbis(2-ethyl-1,3-hexanediolat), Bis(2-ethylhexyloxy)aluminium(2-ethyl-1,3-hexanediolat), Tris(2-chloroethoxy)aluminium, Tris(2-bromoethoxy)aluminium, Tris(2-methoxyethoxy)aluminium, Tris(2-ethoxyethoxy)aluminium, Butoxydimethoxyaluminium, Methoxydibutoxyaluminium, Butoxydiethoxyaluminium, Ethoxydibutoxyaluminium, Butoxydiisopropoxyaluminium, Isopropoxydibutoxyaluminium, Triphenoxyaluminium, Tris(o-chlorophenoxy)aluminium, Tris(m-nitrophenoxy)aluminium, Tris(p-methylphenoxy)aluminium.

Beispielsweise können auch Aluminiumacylate eingesetzt werden: Diisopropoxyaluminiumacrylat, Diisopropoxyaluminiummethacrylat, Isopropoxyaluminiumdimethacrylat, Diisopropoxaluminiumhexanoat, Diisopropoxyaluminiumstearat.

Ferner kann man Aluminiumhalogenverbindungen einsetzen, z.B. Diisopropoxyaluminiumchlorid, Isopropoxyaluminiumdichlorid, Diisopropoxyaluminiumbromid, Diisopropoxyaluminiumfluorid, Diethoxyaluminiumchlorid, Dibutoxyaluminiumchlorid.

Man kann auch Aluminium-Chelatkomplexe als Katalysatoren einsetzen, beispielsweise Methoxyaluminiumbis(ethylacetoacetat), Methoxyaluminiumbis(acetylacetonat), Ethoxyaluminiumbis(ethylacetoacetat), Ethoxyaluminiumbis(acetylacetonat), Isopropoxyaluminiumbis(ethylacetoacetat), Isopropoxyaluminiumbis(methylacetoacetat), Isopropoxyaluminiumbis(t-butylacetoacetat), Dimethoxy-aluminium(ethylacetoacetat), Dimethoxyaluminium(acetylacetonat), Diethoxy-aluminium(ethylacetoacetat), Diethoxyaluminium(acetylacetonat), Diisopropoxy-aluminium(ethylacetoacetat), Diisopropoxyaluminium(methylacetoacetat), Diisopropoxyaluminium(t-butylacetoacetat), Isopropoxyaluminiumbis(methyl-3-oxo-4,4-dimethylhexanoat), Isopropoxyaluminiumbis(ethyl-3-oxo-4,4,4-trifluoropentanoat), Isopropoxyaluminiumbis(acetylacetonat), Isopropoxyaluminiumbis(2,2,6,6-tetramethyl-3,5-heptanedionat), n-Butoxyaluminiumbis(ethylacetoacetat), n-Butoxyaluminiumbis(acetylacetonat), Isobutoxyaluminiumbis(ethylacetoacetat), Isobutoxyaluminiumbis(acetylacetonat), t-Butoxyaluminiumbis(ethylacetoacetat), t-Butoxyaluminiumbis(acetylacetonat), 2-Ethylhexoxyaluminiumbis(ethylacetoacetat), 2-Ethylhexoxyaluminiumbis(acetylacetonat), 1,2-Dioxyethanaluminium(ethylacetoacetat), 1,3-Dioxypropanaluminium(ethylacetoacetat), 2,4-Doxypentan-aluminim(ethylacetoacetat), 2,4-Dmethyl-2,4-dioxypentanaluminim(ethylacetoacetat), Iopropoxyaluminiumbis(triethanolaminat), Aluminiumtris(ethylacetoacetat), Aluminiumtris(acetylacetonat), Aluminium(acetylacetonat)bis(ethylacetoacetat).

Bevorzugt werden folgende Aluminium-Chelatkomplexe als Katalysatoren eingesetzt, da sie kommerziell erhältlich sind und hohe katalytische Aktivitäten aufweisen: Ethoxyaluminiumbis(ethylacetoacetat), Ethoxyaluminiumbis(acetylacetonat), Isopropoxyaluminiumbis(ethylacetoacetat), Isopropoxyaluminiumbis(acetylacetonat), Butoxyaluminiumbis(ethylacetoacetat), Butoxyaluminiumbis(acetylacetonat), Dimethoxyaluminiumethylacetoacetat, Dimethoxyaluminiumacetylacetonat, Diethoxyaluminiumethylacetoacetat, Diethoxyaluminiumacetylacetonat, Diisopropoxyaluminiumethylacetoacetat, Diisopropoxyaluminiummethylacetoacetat und Diisopropoxyaluminium(t-butylacetoacetat).

Besonders bevorzugt sind Ethoxyaluminiumbis(ethylacetoacetat), Isopropoxyaluminiumbis(ethylacetoacetat), Butoxyaluminiumbis(ethylacetoacetat), Dimethoxyaluminiumethylacetoacetat, Diethoxyaluminiumethylacetoacetat und Diisopropoxyaluminiumethylacetoacetat. Ganz besonders bevorzugt sind Isopropoxyaluminiumbis(ethylacetoacetat) und Diisopropoxyaluminiumethylacetoacetat.

Ferner können z.B. auch folgende Aluminiumkatalysatoren eingesetzt werden: Bis(dioctylphosphato)isopropoxyaluminium, Bis(dodecylbenzylsulfonato)isopropoxyaluminium, Hydroxyaluminiumbislactat.

Als Zirkonkatalysatoren eignen sich: Tetramethoxyzirkon, Tetraethoxyzirkon, Tetraallyloxyzirkon, Tetra-n-Propoxyzirkon, Tetraisopropoxyzirkon, Tetra-n-butoxyzirkon, Tetraisobutoxyzirkon, Tetra-(2-butoxy)zirkon, Tetra(t-butoxy)zirkon, Tetrapentoxy(zirkon), Tetracyclopentoxyzirkon, Tetrahexoxyzirkon, Tetracyclohexoxyzirkon, Tetrabenzoxyzirkon, Tetraoctoxyzirkon, Tetrakis(2-ethylhexoxy)-zirkon, Tetradecoxyzirkon, Tetradodecoxyzirkon, Tetrastearoxyzirkon, Tetrabutoyzirkon-Dimer, Tetrakis(8-hydroxyoctoxy)zirkon, Zirkondiisopropoxy-bis(2-ethyl-1,3-hexandiolat), Zirkon- bis(2-ethylhexyloxy)bis(2-ethyl-1,3-hexanediolate), Tetrakis(2-chloroethoxy)zirkon, Tetrakis(2-bromoethoxy)zirkon, Tetrakis(2-methoxyethoxy)zirkon, Tetrakis(2-ethoxyethoxy)zirkon, Butoxy-Trimethoxyzirkon, Dibutoxydimethoxyzirkon, Butoxytriethoxyzirkon, Dibutoxydiethoxyzirkon, Butoxitriisopropoxyzirkon, Dibutoxydiisopropoxyzirkon, Tetraphenoxybutan, Tetrakis(o-chlorophenoxy)zirkon, Tetrakis(m-nitrophenoxy)zirkon, Tetrakis(p-methylphenoxy)zirkon, Tetrakis(trimethylsiloxy)zirkon, Diisopropoxyzirkon-bis(ethylacetoacetat), Diisopropoxyzirkonbis(acetylacetonat), Dibutoxyzirkonbis(ethylacetoacetat), Dibutoxyzirkonbis(acetylacetonat), Triisopropoxyzirkonethylacetoacetat, Triisopropoxyzirkonacetylacetonat, Tris(n-butoxy)zirkonethylacetoacetat, Tris(n-butoxy)zirkonacetylacetonat, Isopropoxyzirkontris(ethylacetoacetat), Isopropoxyzirkontris(acetylacetonat), n-Butoxyzirkontris(ethylacetoacetat), n-Butoxyzirkontris(acetylacetonat), n-Butoxyzirkon(acetylacetonat)bis(ethylacetoacetat).

Bevorzugt setzt man beispielsweise Diethoxyzirkonbis(ethylacetoacetat), Diisopropoxyzirkonbis(ethylacetoacetat), Dibutoxyzirkonbis(ethylacetoacetat), Triispropoxyzirkon(ethylacetoacetat), Tris(n-butoxy)zirkon(ethylacetoacetat), Isopropoxyzirkontris(ethylacetoacetat), n-butoxyzirkontris(ethylacetoacetat) and n-Butoxyzirkon(acetylacetonat)bis(ethylacetoacetat). Ganz besonders bevorzugt kann man Diisopropoxyzirkonbis(ethylacetoacetat), Triispropoxyzirkon(ethylacetoacetat) and Isopropoxyzirkontris(ethylacetoacetat).

Ferner kann man beispielwseise Zirkonacylate einsetzen: Triisopropoxyzirkon, Triisopropoxyzirkonmethacrylat, Diisopropoxyzirkondimethacrylat, Isopropoxyzirkontrimethacrylat, Triisopropoxyzirkonhexanoat, Triisopropoxyzirkonstearat und ähnliche.

Als halogenierte Zirkonkatalysatoren kann man folgende Verbindungen einsetzen: Triisopropoxyzirkonchlorid, Diisopropoxyzirkondichlorid, Isopropoxyzirkontrichlorid, Triisopropoxyzirkonbromid, Triisopropoxyzirkonfluorid, Triethoxyzirkonchlorid, Tributoxyzirkonchlorid.

Ferner kann man auch Zirkonchelatkomplexe einsetzen: Dimethoxyzirkonbis(ethylacetoacetat), Dimethoxyzirkonbis(acetylacetonat), Diethoxyzirkonbis(ethylacetoacetat), Diethoxyzirkonbis(acetylacetonat), Diisopropoxyzirkonbis(ethylacetoacetat), Diisopropoxyzirkonbis(methylacetoacetat), Diisopropoxyzirkonbis(t-butylacetoacetat), Diisopropoxyzirkonbis(methyl-3-oxo-4,4-dimethylhexanoat), Diisopropoxyzirkonbis(ethyl-3-oxo-4,4,4-trifluorobutanoat), Diisopropoxyzirkonbis(acetylacetonat), Diisopropoxyzirkonbis(2,2,6,6-tetramethyl-3,5-heptanedionat), Di(n-butoxy)zirkonbis(ethylacetoacetat), Di(n-butoxy)zirkon-bis(acetylacetonat), Diisobutoxyzirkonbis(ethylacetoacetat), Diisobutoxyzirkon-bis(acetylacetonat), Di(t-butoxy)zirkonbis(ethylacetoacetat), Di(t-butoxy)zirkon-bis(acetylacetonat), Di(2-ethylhexoxy)zirkonbis(ethylacetoacetat), Di(2-ethylhexoxy)zirkonbis(acetylacetonat), Bis(1-methoxy-2-propoxy)zirkonbis(ethylacetoacetat), Bis(3-oxo-2-butoxy)-zirkonbis(ethylacetoacetat), Bis(3-diethylamino-propoxy)zirkonbis(ethylacetoacetat), Triisopropoxyzirkon(ethylacetoacetat), Triisopropoxyzirkon(diethylmalonat), Triisopropoxyzirkon(allylacetoacetat), Triisopropoxyzirkon(methacryloxyethylacetoacetat), 1,2-Dioxyethanzirkonbis(ethylacetoacetat), 1,3-Dioxypropanzirkonbis(ethylacetoacetat), 2,4-Dioxypentanzirkon-bis(ethylacetoacetat), 2,4-Dimethyl-2,4-Dioxypentanzirkonbis(ethylacetoacetat), Diisopropoxyzirkonbis(triethanolaminat), Tetrakis(ethylacetoacetato)zirkon, Tetrakis(acetylacetonato)zirkon, Bis(trimethylsiloxy)zirkonbis(ethylacetoacetat), Bis(tri-methylsiloxy)zirkonbis(acetylacetonat).

Folgende Zirkonchelatkomplexen werden bevorzugt eingesetzt, da sie kommerziell erhältlich sind und eine hohe katalytische Aktivität aufweisen: Diethoxyzirkonbis(ethylacetoacetat), Diethoxyzirkonbis(acetylacetonat), Diiso-propoxyzirkonbis(ethylacetoacetat), Diisopropoxyzirkonbis(acetylacetonat), Dibutoxyzirkonbis(ethylacetoacetat) and Dibutoxyzirkonbis(acetylacetonat)

Besonders bevorzugt ist Diethoxyzirkonbis(ethylacetoacetat), Diisopropoxyzirkon(ethylacetoacetat) and Dibutoxyzirkonbis(ethylacetoacetat), ganz besonders bevorzugt ist Diisopropoxyzirkonbis(ethylacetoacetat).

Ferner kann man auch folgende Zirkonkatalysatoren einsetzen: Isopropoxyzirkontris(dioctylphosphat), Isopropoxyzirkontris(dodecylbenzylsulfonat), Dihydroxyzirkonbislactat.

Außerdem kann man als Härtungskatalysatoren Carbonsäuresalze von Metallen, oder auch eine Mischung mehrerer solcher Salze, heranziehen, wobei diese ausgewählt sind aus den Carboxylaten folgender Metalle: Calcium, Vanadium, Eisen, Titan, Kalium, Barium, Mangan, Nickel, Kobalt und/oder Zirkon.

Von den Carboxylaten sind die Calcium-, Vanadium-, Eisen-, Titan-, Kalium-, Barium-, Mangan- und Zirkoniumcarboxylate bevorzugt, da sie eine hohe Aktivität aufweisen.
Besonders bevorzugt werden Calcium-, Vanadium-, Eisen-, Titan- und Zirkoniumcarboxylate.
Ganz besonders bevorzugt werden Eisen- und Titancarboxylate.

Man kann z. B. folgende Verbindungen einsetzen: Eisen(II)(2-ethylhexanoat), Eisen(III)(2-ethylhexanoat), Titan(IV)(2-ethylhexanoat), Vanadium(III)(2-ethylhexanoat), Calcium(II)(2-ethylhexanoat) Kalium-2-ethylhexanoat, Barium(II)(2-ethylhexanoat), Mangan(II)(2-ethylhexanoat), Nickel(II)(2-ethylhexanoat), Cobalt(II)(2-ethylhexanoat), Zircon(IV)(2-ethylhexanoat), Eisen(II)neodecanoat, Eisen(III)neodecanoat, Titan(IV)neodecanoat, Vanadium(III)neodecanoat, Calcium(II)neodecanoat, Kaliumneodecanoat, Barium(II)neodecanoat, Zirconium(IV)neodecanoat, Eisen(II)oleat, Eisen(III)oleat, Titantetraoleat, Vanadium(III)oleat, Calcium(II)oleat, Kaliumoleat, Barium(II)oleat, Mangan(II)oleat, Nickel(II)oleat, Cobalt(II)oleat, Zirconium(IV)oleat, Eisen(II)naphthenat, Eisen(III)naphthenat, Titan(IV)naphthenat, Vanadium(III)naphthenat, Calciumdinaphthenat, Kaliumnaphthenat, Bariumdinaphthenat, Mangandinaphthenat, Nickel dinaphthenat, Cobaltdinaphthenat, Zircon(IV)naphthenat.
In Hinblick auf die katalytische Aktivität werden Eisen(II)2-ethylhexanoat, Eisen (III)2-ethylhexanoat, Titan(IV)2-ethylhexanoat, Eisen(II)neodecanoat, Eisen(III)neodecanoat, Titan(IV)neodecanoat, Eisen(II)oleat, Eisen(III)oleat, Titanium(IV)oleat, Eisen(II)naphthenat, Eisen(III)naphthenat und Titan(IV)naphthenat bevorzugt, und Eisen(III)2-ethylhexanoat, Eisen(III)neodecanoat, Eisen(III)oleat und Eisen(III)naphthenat besonders bevorzugt.

In Hinblick auf das Nichteintreten von Verfärbungen sind bevorzugt: Titan(IV)2-ethylhexanoat, Calcium(II)2-ethylhexanoat, Kalium-2-ethylhexanoat, Barium(II)2-ethylhexanoat, Zircon(IV)2-ethylhexanoat, Titan(IV)neodecanoat, Calcium(II)neo-decanoat, Kaliumneodecanoat, Barium(II)neodecanoat, Zircon(IV)neodecanoat, Titan(IV)oleat, Calcium(II)oleat, Kaliumoleat, Barium(II)oleat, Zircon(IV)oleat, Titan(IV)naphthenat, Calcium(II)naphthenat, Kaliumnaphthenat, Barium(II)naphthenat und Zircon(IV)naphthenat.

Die Calciumcarboxylate, Vanadiumcarboxylate, Eisencarboxylate, Titancarboxylate, Kaliumcarboxylate, Bariumcarboxylate, Mangancarboxylate, Nickelcarboxylate, Cobaltcarboxylate und Zirconcarboxylate können einzeln oder als Mischung mehrerer Katalysatoren aus einer oder mehrerer der erwähnten Gruppen eingesetzt werden. Außerdem kann man diese Metallcarboxylate in Verbindung mit Zinncarboxylaten, Bleicarboxylaten Bismutcarboxylaten und Cercarboxylaten einsetzen.

Der Katalysator, bevorzugt Mischungen mehrerer Katalysatoren, werden in einer Menge von 0,01 bis etwa 5 Massen-% bezogen auf das Gesamtgewicht der Zubereitung bzw. des erfindunsgemäßen Kleb- oder Dichtstoffs eingesetzt.

Der Kleb- oder Dichtstoff kann zusätzlich Füllstoffe enthalten, wie sie bisher im Stand der Technik verwendet worden sind. Hier eignen sich beispielsweise Kreide, Sand, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Quartz, Flint, Glimmer und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Walnusschalen und andere Faserkurzschnitte. Ferner können auch Kurzfasem wie Glasfaser, Glasfilament, Polyacrylnitril, Kohlefaser, Kevlarfaser oder auch Polyethylenfasem zugesetzt werden. Aluminiumpulver ist ebenfalls als Füllstoff geeignet.

Die pyrogenen und gefällten Kieselsäuren haben vorteilhaft eine BET-Oberfläche von 10 bis 90 m²/g. Dieser Zusatzstoff wirkt bei Zugabe zum Bindemittel nicht viskositätserhöhend, verstärkt aber die Klebe- bzw. Dichtverbindung nach Aushärtung. Setzt man, ebenfalls vorteilhaft, Kieselsäure mit einer BET-Oberfläche zwischen 90 und 250 m²/g, vorzugsweise von 100 bis 200 m²/g, ein, wirkt diese wie ein Verdicker, d. h. die Viskosität nimmt bei erhöhter Zugabe zu. Vorteilhafterweise bewirkt die Zugabe solcher Füllstoffe eine Verstärkung der Klebe- bzw. Dichtverbindung nach Aushärtung. Setzt man Kieselsäure mit höherer BET-Oberfläche ein, erhält man - wegen der höheren spezifischen Oberfläche - den gleichen Effekt bei weniger zugesetztem Füllstoff im Vergleich zur Kieselsäure mit geringerer BET-Oberfläche. Da man so weniger Füllstoff zusetzen muss, bleibt mehr Spielraum in der Formulierung, um diese durch Zugabe weiterer Additive zu optimieren.

Weiterhin eignet sich Glaspulver als Füllstoff.

Weiterhin eignen sich als Füllstoff Hohlkugeln mit einer mineralischen oder Kunststoffhülle. Dies können beispielsweise Glashohlkugeln sein, die unter den Handelsbezeichnungen Expancel^{®} oder Dualite^{®} kommerziell erhältlich sind. Hohlkugeln auf Kunststoffbasis werden beispielsweise in der EP 0 520 426 B1 beschrieben. Diese sind aus anorganischen oder organischen Stoffen zusammengesetzt, jeder mit einem Durchmesser von 1 mm oder weniger, bevorzugt von 500 µm oder weniger.

Für manche Anwendungen sind Füllstoffe bevorzugt, die den Zubereitungen Thixotropie verleihen, z.B. hydrogeniertes Rizinusöl, Fettsäureamide oder quellbare Kunststoffe wie PVC. Um gut aus einer geeigneten Dosiervorrichtung (z.B. Tube) auspressbar zu sein, besitzen solche Zusammensetzungen eine Viskosität von 5000 bis 200000, bevorzugt 20000 bis 150000 mPas, und besonders bevorzugt 40000 bis 100000 (nach DIN 53019 ermittelt mit Brookfield RVT, 25 °C, 50 U/min, Kegel-Platte Geometrie, Kegeldurchmesser 25 mm, Öffnungswinkel 2,3° (= 0,04 rad)).

Als weitere Bestandteile bzw. Additive kann der erfindungsgemäße Kleb- oder Dichtstoff die im Stand der Technik bekannten Reaktivverdünner, Weichmacher, Lösemittel, UV-Stabilisatoren, Antioxidanzien, Trockenmittel und Haftvermittler enthalten.

Es ist auch denkbar, dass die Viskosität des erfindungsgemäßen Kleb- oder Dichtstoffs für bestimmte Anwendungen zu hoch ist. Diese kann man dann in der Regel durch Verwendung eines Reaktivverdünners auf einfache und zweckmäßige Weise verringern einstellen, ohne dass es zu Entmischungserscheinungen (z.B. Weichmacherwanderung) in der ausgehärteten Masse kommt.

Vorzugsweise weist der Reaktivverdünner mindestens eine funktionelle Gruppe auf, die nach der Applikation z.B. mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme.

Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Die Viskosität des Reaktivverdünners beträgt bevorzugt weniger als 20000 mPas, besonders bevorzugt etwa 0,1-6000 mPas, ganz besonders bevorzugt 1-1000 mPas (Brookfield RVT, 23°C, Spindel 7, 10 U/min in einem 600 ml Becherglas (niedrige Form, Durchmesser 83 mm)).

Als Reaktivverdünner kann man z.B. folgende Stoffe einsetzen: mit Isocyanatosilanen bzw. isocyanatofuntionellen Alkoxysilanen umgesetzte Polyalkylenglykole (z.B. Synalox 100-50B, DOW), Carbamatopropyltrimethoxysilan, Alkyltrimethoxysilan, Alkyltriethoxysilan, wie Methyltrimethoxysilan, Methyltriethoxysilan sowie Vinyltrimethoxysilan (XL 10, Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silanmodifizierte Polyether verwenden, die sich z.B. aus der Umsetzung von Isocyanatoalkoxysilan mit Synalox Typen ableiten.

Weiterhin kann man als Reaktivverdünner Polymere einsetzen, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH - Gruppen enthalten kann. Die OH -Gruppen können sowohl primär als auch sekundär sein.

Zu den geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie z.B. Ester, Carbonate, Amide enthalten.

Zur Herstellung der erfindungsgemäß bevorzugten Reaktivverdünner wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt.

Vorzugsweise weist die im Rahmen der vorliegenden Erfindung als Reaktivverdünner vorliegende Verbindung mindestens eine Alkoxysilylgruppe auf, wobei unter den Alkoxysilylgruppen die Di- und Trialkoxysilylgruppen bevorzugt sind.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4-oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

Ebenso kann man als Polyisocyanate sind drei- oder höherwertige Isocyanate, wie sie beispielsweise durch Oligomerisierung von Diisocyanaten, insbesondere durch Oligomerisierung der oben genannten Isocyanate, erhältlich sind, einsetzen.

Beispiele für solche drei- und höherwertigen Polyisocyanate sind die Triisocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Ebenfalls zum Einsatz als Polyolkomponente geeignet sind Polyether, die durch Vinylpolymere modifiziert wurden. Derartige Produkte sind beispielsweise erhältlich, indem Styrol und/oder Acrylnitril in Gegenwart von Polyethern polymerisiert werden.

Weiterhin können als Polyolkomponente für die Herstellung des Reaktivverdünners Polyesterpolyole mit einem Molekulargewicht von etwa 200 bis etwa 5000 verwendet werden. So können beispielsweise Polyesterpolyole verwendet werden, die durch die bereits oben beschriebene Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind, wie bereits genannt, 1,4-Hydroxymethylcyclohexan, 2-Methyl-1 ,3-Propandiol, Butandiol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren oder deren reaktiven Derivaten zu Polyesterpolyolen kondensiert werden. Geeignete Dicarbonsäuren und Tricarbonsäuren sowie geeignete Alkohole wurden bereits oben genannt.

Ebenfalls als Polyolkomponente zur Herstellung der Reaktivverdünner geeignet sind Polyacetale. Unter Polyacetalen werden Verbindungen verstanden, wie sie aus Glykolen, beispielsweise Diethylenglykol oder Hexandiol mit Formaldehyd erhältlich sind. Im Rahmen der Erfindung einsetzbare Polyacetale können ebenfalls durch die Polymerisation zyklischer Acetale erhalten werden.

Weiterhin als Polyol zur Herstellung der Reaktivverdünner geeignet sind Polycarbonate. Polycarbonate können beispielsweise durch die Reaktion von Diolen wie Propylenglykol, Butandiol-1,4- oder Hexandiol-1,6-, Diethylenglykol, Triethylenglykol oder Tetraethylenglykol oder Gemischen aus zwei oder mehr davon, mit Diarylcarbonaten, beispielsweise Diphenylcarbonat oder Carbonyldichlorid erhalten werden.

Ebenfalls als Polyolkomponente zur Herstellung der Reaktivverdünner geeignet sind OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomere sind beispielsweise durch die Veresterung von ethylenisch ungesättigten Carbonsäuren und bifunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Zur Reduzierung der Viskosität der Kleb- und Dichtstoff-Formulierung lassen sich neben oder anstatt eines Reaktivverdünners auch Lösungsmittel und/oder Weichmacher einsetzen.

Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da hier die Lagerstabilität steigt. C₁-C₁₀-Alkohole, besonders Methanol, Ethanol, i-Propanol, Isoamylalkohol und Hexanol werden bevorzugt.

Der Kleb- oder Dichtstoff kann ferner hydrophile Weichmacher enthalten. Diese dienen zur Verbesserung der Feuchtigkeitsaufnahme und damit zur Verbesserung der Reaktivität bei niedrigen Temperaturen. Als Weichmacher geeignet sind beispielsweise Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf).

Beispielsweise eignen sich von den Phthalsäureestem Dioctylphthalat, Dibutylphthalat oder Butylbenzylphthalat, von den Adipaten Dioctyladipat, Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄-C₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

In einer weiteren bevorzugten Ausführungsform der vorliegenden Erfindung werden als Weichmacher endgruppenverschlossene Polyethylenglykole eingesetzt. Beispielsweise Polyethylen oder Polypropylenglykoldi-C₁₋₄-alkylether, insbesondere die Dimethyloder Diethylether von Diethylenglykol oder Dipropylenglykol, sowie Gemische aus zwei oder mehr davon.

Besonders bevorzugt sind jedoch endgruppenverschlossene Polyethylenglykole, wie Polyethylen oder Polypropylenglykoldialkylether, wobei der Alkylrest ein bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im wesentlichen alle freien OH-Gruppen abreagieren. Gegebenenfalls überschüssiges Isocyanat kann anschliessend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Der Kleb- oder Dichtstoff kann außerdem bis zu etwa 20 Massen-% an üblichen Haftvermittlern enthalten. Als Haftvermittler geeignet sind beispielsweise Aminosilane, beispielsweise Silane der Formel (IV), Harze, Terpen-Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden beispielsweise auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Zusatzstoff im oben genannten Sinne geeignet sind die Kolophoniumharze und deren Derivate, beispielsweise deren Ester oder Alkohole.

Der Kleb- oder Dichtstoff kann weiterhin bis zu etwa 7 Massen-%, insbesondere bis zu etwa 5 Massen-% Antioxidantien enthalten.

Der Kleb- oder Dichtstoff kann auch bis zu etwa 2 Massen-%, vorzugsweise etwa 1 Massen-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und/oder Schwefel zugegeben werden.

Häufig ist es sinnvoll, die erfindungsgemäßen Kleb- oder Dichtstoffe durch Trockenmittel weiter gegenüber eindringender Feuchtigkeit zu stabilisieren, um die Lagerstabilität (shelf-life) noch weiter zu erhöhen. Eine solche Verbesserung der Lagerstabilität lässt sich beispielsweise durch den Einsatz von Trockenmitteln erreichen. Als Trockenmittel eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muss die Reaktivität der Trockenmittel gegenüber in die Zubereitung eingedrungener Feuchtigkeit höher sein, als die Reaktivität der Endgruppen des in der Zusammensetzung vorliegenden erfindungsgemässen silylgruppentragenden Polymers.

Als Trockenmittel eignen sich beispielsweise Isocyanate.

In einer bevorzugten Ausführungsform werden als Trockenmittel jedoch Silane eingesetzt. Beispielsweise Vinylsilane wie 3-Vinylpropyltriethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder - ethylethoxysilan ist möglich. Besonders bevorzugt sind hier Vinyltrimethoxysilan und Tetraethoxysilan hinsichtlich Effizienz und Kosten.

Ebenfalls als Trockenmittel geeignet sind die oben genannten Reaktivverdünner, sofern sie ein Molekulargewicht (Mₙ) von weniger als etwa 5000 g/mol aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemässen silylgruppentragenden Polymers.

Schließlich können als Trockenmittel auch Alkylorthoformiate oder -orthoacetate eingesetzt werden, bsw. Methyl- oder Ethylorthoformiat, Methyl- oder Ethylorthoacetat.

Die erfindungsgemäßen Kleb- oder Dichtstoffe enthalten in der Regel etwa 0 bis etwa 6 Massen-% Trockenmittel.

Die Herstellung des erfindungsgemäßen Kleb- oder Dichtstoffs erfolgt nach bekannten Verfahren durch inniges Vermischen der Bestandteile in geeigneten Dispergieraggregaten, z.B. einem Schnellmischer.

Die Erfindung betrifft auch die Verwendung von Verbindungen der Formel (I) als Additiv in silanvernetzenden Kleb- oder Dichtstoffen. Das Additiv wird bevorzugt zur Erhöhung der Elastizität eingesetzt.

Die Erfindung betrifft auch die Verwendung des erfindungsgemäßen Kleb- oder Dichtstoffs zum Verkleben von Kunststoffen, Metallen, Glas, Keramik, Holz, Holzwerkstoffen, Papier, Papierwerkstoffen, Gummi und Textilien, Verkleben von Fußböden, Abdichten von Bauwerksteilen, Fenstern, Wand- und Bodenbelägen sowie Fugen allgemein. Hierbei können die Materialien jeweils mit sich selbst oder beliebig untereinander verklebt werden. Im Folgenden wird die Erfindung anhand von Ausführungsbeispielen näher erläutert.

### Beispiel 1:

Herstellung einer erfindungsgemäßen Verbindung durch Umsetzung von:

| | |
|---|---|
| 160,4g | C12/14 Fettsäuremethylester (Cognis, Edenor ME C12-C14) |
| 239,6g | 3-Aminopropyltriethoxysilan (Wacker, Geniosil GF 93) |
| 6,2g | Natriummethanolat-Lösüng (ethanolisch, 21 Massen-%) |

Das Gemisch wird dazu bei 80-90°C unter Abscheidung von Methanol für 4h unter Stickstoffatmosphäre gerührt. Es erfolgt keine Aufreinigung des Endproduktes.

### Beispiel 2:

Herstellung eines endständig mit Alkoxysilylgruppen funktionalisierten Poly(propylenglycol) Polymers:

1377,5 g Polypropylenglycol 18000 (M=12000 g/mol, OHZ=9,6) wurden in einem 3000 ml Glas-Dreihalskolben bei 100°C für eine Stunde im Vakuum getrocknet. Unter Stickstoffatmosphäre wurden bei 80°C 0,4 g Dibutylzinndilaurat sowie 6 g Isocyanatpropyltrimethoxysilan hinzugegeben. Die Reaktionsmischung wurde dann für 1 h unter Stickstoffatmosphäre bei 80°C gerührt. Nach Abkühlung auf ca. 35°C wurde das Produkt mit 29,8 g Vinyltrimethoxysilan versetzt und in ein gegen Feuchtigkeit verschlossenes Gefäß gefüllt.

### Beispiel 3-7:

Es wurden Mischungen nach unten gegebener Zusammensetzung hergestellt und die mechanischen Eigenschaften der ausgehärteten Filme nach DIN 53504 sowie die Zugscherfestigkeit von Verklebungen untersucht.

| | | **Bsp. 3** | **Bsp. 4** | **Bsp. 5** | **Bsp. 6** | **Bsp. 7** |
|---|---|---|---|---|---|---|
| Prepolymer (Produkt aus Beispiel 2) | (g) | 26,40 | 23,40 | | 20,40 | |
| Produkt aus Beispiel 1 | (g) | | 3,00 | | 6,00 | |
| C12/14 Fettsäuremethylester (Cognis, Edenor ME C12-14) | (g) | | | 1,20 | | 2,40 |
| Aminopropypyltriethoxysilan (Wacker, Geniosil GF 93) | (g) | | | 1,80 | | 3,60 |
| Vinyltrimethoxysilan (Wacker, Geniosil XL 10) | (g) | 0,50 | 0,50 | | 0,50 | |
| Aminopropyltrimethoxysilan (Wacker Geniosil GF96) | (g) | 0,26 | 0,26 | | 0,26 | |
| Dibutylzinndilaurat | (g) | 0,015 | 0,015 | | 0,015 | |
| Zugscherfestigkeit, Verklebung Buchensperrholz/Buchensperrholz (100 mm/min) | [N/mm²] | 2,8 | 3,7 | 3,1 | 4,5 | 3,9 |
| Bruchkraft | [N/mm²] | 0,7 | 1,00 | 0,8 | 1,8 | 1,5 |
| Bruchdehnung | [%] | 60 | 76 | 55 | 100 | 75 |
| Modul, 50% Dehnung | [N/mm²] | 0,7 | 0,8 | 0,7 | 1,1 | 1,3 |

### Prüfung der Zug- und Scherfestigkeit

### 1.) Verklebung

-> Auftrag des Klebstoffs mit einem feinen Riefenspachtel (erzeugt Raupen 1x1 mm im Abstand von 1 mm)
-> Fixierung der Prüfkörper zueinander mit 2 Wäscheklammern
-> Aushärten der Verklebung bei Normklima (23°C, 50% rel. Feuchtigkeit) für 7 Tage

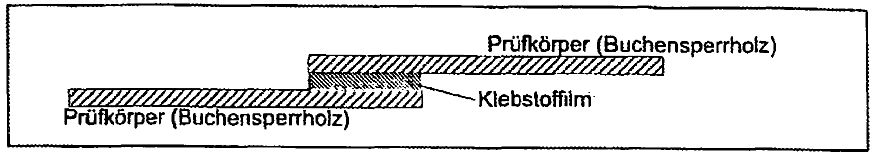

### 2.) Zugversuch

-> ZWICK Z 010 (10kN Kraftaufnehmer)
-> Streckung mit 10 mm pro Minute bis zum Bruch der Verklebung
-> Die Zug-Scherfestigkeit ist dann die Maximalkraft bei Bruch der Verklebung

Beispiel 3 zeigt als Referenz die mechanischen Eigenschaften eines Bindemittels ohne das erfindungsgemäße Additiv.

Beispiele 4 bis 6 stehen für erfindungsgemäße Kleb- oder Dichtstoffe, die in steigender Konzentration das erfindungsgemäße Additiv enthalten. Dabei ist eine Zunahme der Zugscherfestigkeit bei gleichzeitiger Zunahme der Bruchdehnung in Abhängigkeit der Additivmenge erkennbar.

Beispiel 5 enthält eine zu Beispiel 4 äquivalente Zusammensetzung, wobei jedoch der Ester (nach III) und das Silan (nach IV) nicht miteinander zum Additiv (nach I) umgesetzt wurden. Dabei ist erkennbar, dass die rein physikalische Mischung der dem Additiv zugrunde gelegten Komponenten deutlich geringere Effekte zeigt.

Analoges gilt für die Beziehung zwischen Beispiel 7 und Beispiel 6.

## Patentansprüche

1. Silanvernetzender Kleb- oder Dichtstoff, enthaltend ein Polymer, bestehend aus einem organischen Grundgerüst mit Kohlenstoffatomen in der Hauptkette, das mindestens zwei Alkoxy- und / oder Acyloxysilylgruppen trägt, **dadurch gekennzeichnet, dass** als weitere Komponente Verbindungen der Formel (I) 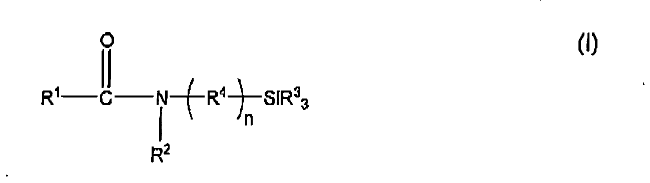 worin
R¹ ein geradkettiger oder verzweigter, substituierter oder unsubstituierter Alkylrest mit 1 bis 24 C-Atomen ist,
R² ein Wasserstoff- oder ein geradkettiger oder verzweigter Kohlenwasserstoffrest mit 1 bis 10 C-Atomen ist,
R³ ein Alkoxyrest mit 1 bis 8 C-Atomen oder Alkylrest mit 1 bis 24 C-Atomen ist,
R⁴ ein geradkettiger oder verzweigter Alkylenrest mit 1 bis 8 C-Atomen, worin C-Atome durch Stickstoff oder Sauerstoffatome substituiert sein können, ist,
n = 1 bis 8, bevorzugt n = 3 bis 8, ist,
wobei die Reste R³ jeweils gleich oder verschieden sein können und mindestens zwei der Reste Alkoxyreste sind,
als Additiv enthalten sind,
**dadurch gekennzeichnet, dass** das organische Grundgerüst ausgewählt ist aus der Gruppe umfassend Polyamide, Polyether, Polyester, Polycarbonate, Polyethylene, Polybutylene, Polystyrole, Polypropylene, Polyacrylate, Poly(meth)acrylate, Polyoxymethylenhomo- und -copolymere, Polyurethane, Vinylbutyrate, Vinylpolymere, Reyon, Ethylencopolymere, Ethylenacrylsäurecopolymere, Ethylenacrylatcopolymere, organische Kautschuke.

2. Kleb- oder Dichtstoff nach Anspruch 1, **dadurch gekennzeichnet, dass** R¹ ein gradkettiger oder verzweigter, substituierter oder unsubstituierter Alkylrest mit 1 bis 24 C-Atomen ist, der OH- oder Epoxygruppen enthalten kann, und / oder R² ein Wasserstoff-, Butyl-, Cyclohexyl- oder Phenylrest ist und / oder R³ ein Methoxy-, Ethoxy- oder Alkylrest mit 1 bis 24 C-Atomen ist

3. Kleb- oder Dichtstoff nach Anspruch 1 oder 2, **dadurch gekennzeichnet, dass** das Polymer der allgemeinen Formel (II) 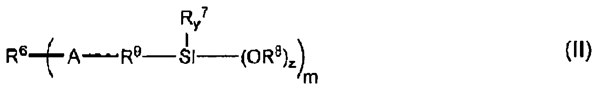 entspricht, in der R⁶ ein organisches Grundgerüst ist,
A eine zweibindige Bindegruppe, insbesondere eine Amid-, Carbamat-, Harnstoff-, oder Carbamoylgruppe, ein Sauerstoffatom, ein Stickstoffatom oder eine Methylengruppe, bedeutet,
R⁷ ein Alkylrest mit 1 bis 8 C-Atomen, Insbesondere ein Alkylrest mit 1 bis 4 C-Atomen, ist,
R⁸ ein Alkylrest mit 1 bis 8 C-Atomen oder ein Acylrest mit 1 bis 8 C-Atomen, insbesondere ein Alkylrest mit 1 bis 4 C-Atomen oder ein Acylrest mit 1 bis 4 C-Atomen, ist,
R⁹ ein geradkettiger oder verzweigter, substituierter oder unsubstituierter Alkylenrest mit 1 bis 8 C-Atomen ist,
y = 0 bis 2 ist,
z = 3 - y ist und
m = 1 bis 10000 ist,
wobei die Silylreste gleich oder verschieden sein können und im Falle von mehreren Resten R⁷ bzw. R⁸ diese jeweils gleich oder verschieden sein können.

4. Kleb- oder Dichtstoff nach einem der Ansprüche 1 bis 3, **dadurch gekennzeichnet, dass** das organische Grundgerüst ein Polyether oder Polyurethan ist.

5. Kleb- oder Dichtstoff nach einem der Ansprüche 1 bis 4, **dadurch gekennzeichnet, dass** das organische Grundgerüst Polypropylenglykol ist.

6. Kleb- oder Dichtstoff nach einem der Ansprüche 1 bis 5, **dadurch gekennzeichnet, dass** R¹ ein Alkylrest mit 10 bis 16 C-Atomen, insbesondere 12 bis 14 C-Atomen, der OH- oder Epoxygruppen enthalten kann, ist.

7. Kleb- oder Dichtstoff nach einem der Ansprüche 1 bis 5, **dadurch gekennzeichnet, dass** die Verbindungen der Formel (I) hergestellt worden sind aus einem Ester der Formel (III) 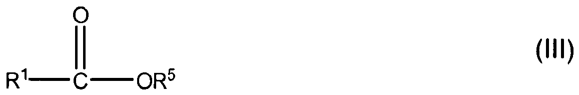 wobei
R¹ ein geradkettiger oder verzweigter, substituierter oder unsubstituierter Alkylrest mit 1 bis 24 C-Atomen ist, und
R⁵ ein Methyl- oder Ethylrest ist,
und einem Silan der Formel (IV) 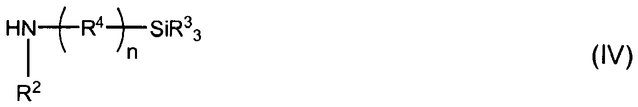 wobei
R² ein Wasserstoff- oder ein geradkettiger oder verzweigter Kohlenwasserstoffrest mit 1 bis 10 C-Atomen ist,
R³ ein Alkoxyrest mit 1 bis 8 C-Atomen oder Alkylrest mit 1 bis 24 C-Atomen ist,
R⁴ ein geradkettiger oder verzweigter Alkylenrest mit 1 bis 8 C-Atomen, worin C-Atome durch Stickstoff- oder Sauerstoffatome substituiert sein können, ist,
n = 1 bis 8, bevorzugt n = 3 bis 8, ist,
wobei die Reste R³ jeweils gleich oder verschieden sein können und mindestens zwei der Reste Alkoxyreste sind.

8. Kleb- oder Dichtstoff nach Anspruch 7, **dadurch gekennzeichnet, dass** das Molverhältnis der Verbindungen der Formel (III) zu Verbindungen der Formel (IV) 1:10 bis 2:1, insbesondere 7:10 bis 7:5 beträgt.

9. Kleb- oder Dichtstofif nach einem der Ansprüche 1 bis 8, enthaltend ein Polymer nach einem der Ansprüche 1 bis 8, ein Vinylsilan, ein Aminosilan, ein Additiv der Formel (I) nach einem der Ansprüche 1 bis 8 und einen Katalysator.

10. Kleb- oder Dichtstoff nach Anspruch 9, **dadurch gekennzeichnet, dass** der Anteil an Verbindungen der Formel (I) 0,1 bis 50 Massen-% am Gesamtbindemittelgehalt, insbesondere 5 bis 30 Massen-% beträgt.

11. Kleb- oder Dichtstoff nach Anspruch 9, **dadurch gekennzeichnet, dass** der Anteil an Verbindungen der Formel (I) 9 bis 11 Massen-% am Gesamtbindemittelgehalt beträgt.

12. Verwendung von Verbindung der Formel (I) nach einem der Ansprüche 1 bis 11 als Additiv in silanvernetzenden Kleb- oder Dichtstoffen.

13. Verwendung von Verbindung der Formel (I) nach einem der Ansprüche 1 bis 11 als Additiv in silanvernetzenden Kleb- oder Dichtstoffen zur Erhöhung der Elastizität.

14. Verwendung eines silanvernetzenden Kleb- oder Dichtstoffs nach einem der Ansprüche 1 bis 11 zum Verkleben von Kunststoffen, Metallen, Glas, Keramik, Holz, Holzwerkstoffen, Papier, Papierwerkstoffen, Gummi und Textilien, Fußböden.

15. Verwendung eines silanvernetzenden Kleb- oder Dichtstoffs nach einem der Ansprüche 1 bis 11 zum Abdichten von Bauwerksteilen, Fenstern, Wand- und Bodenbelägen sowie Fugen.

## Claims

1. A silane-crosslinking adhesive or sealant containing a polymer made up of an organic backbone with carbon atoms in the main chain that carries at least two alkoxy- and/or acyloxysilyl groups, **characterized in that**, as further components, compounds of formula (I) 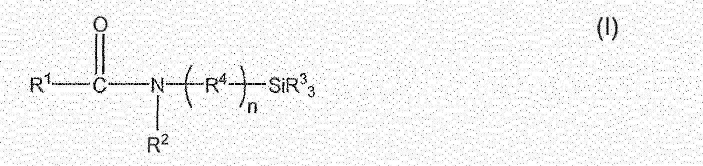 in which
R¹ is a straight-chain or branched, substituted or unsubstituted alkyl residue having 1 to 24 carbon atoms,
R² is a hydrogen residue or a straight-chain or branched hydrocarbon residue having 1 to 10 carbon atoms,
R³ is an alkoxy residue having 1 to 8 carbon atoms or an alkyl residue having 1 to 24 carbon atoms,
R⁴ is a straight-chain or branched alkylene residue having 1 to 8 carbon atoms, in which carbon atoms can be substituted with nitrogen or oxygen atoms,
n = 1 to 8, preferably n = 3 to 8,
wherein the residues R³ can each be the same or different, and at least two of the residues are alkoxy residues,
are contained as an additive,
**characterized in that** the organic backbone is selected from the group encompassing polyamides, polyethers, polyesters, polycarbonates, polyethylenes, polybutylenes, polystyrenes, polypropylenes, polyacrylates, poly(meth)acrylates, polyoxymethylene homo- and copolymers, polyurethanes, vinyl butyrates, vinyl polymers, rayon, ethylene copolymers, ethylene-acrylic acid copolymers, ethylene-acrylate copolymers, organic rubbers.

2. The adhesive or sealant according to Claim 1, **characterized in that** R¹ is a straight-chain or branched, substituted or unsubstituted alkyl residue having 1 to 24 carbon atoms, which can contain OH groups or epoxy groups, and/or R² is a hydrogen, butyl, cyclohexyl, or phenyl residue, and/or R³ is a methoxy, ethoxy, or alkyl residue having 1 to 24 carbon atoms.

3. The adhesive or sealant according to Claim 1 or 2, **characterized in that** the polymer corresponds to the general formula (II) 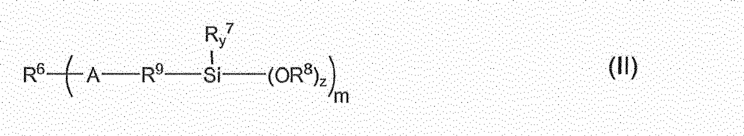 in which R⁶ is an organic backbone,
A signifies a divalent bonding group, in particular an amide, carbamate, urea, or carbamoyl group, an oxygen atom, a nitrogen atom, or a methylene group,
R⁷ is an alkyl residue having 1 to 8 carbon atoms, in particular an alkyl residue having 1 to 4 carbon atoms,
R⁸ is an alkyl residue having 1 to 8 carbon atoms or an acyl residue having 1 to 8 carbon atoms, in particular an alkyl residue having 1 to 4 carbon atoms or an acyl residue having 1 to 4 carbon atoms,
R⁹ is a straight-chain or branched, substituted or unsubstituted alkylene residue having 1 to 8 carbon atoms,
y = 0 to 2,
z = 3 - y, and
m = 1 to 1 0,000,
wherein the silyl residues can be the same or different, and in the case of multiple residues R⁷ or R⁸, they can each be the same or different.

4. The adhesive or sealant according to one of Claims 1 to 3, **characterized in that** the organic backbone is a polyether or polyurethane.

5. The adhesive or sealant according to one of Claims 1 to 4, **characterized in that** the organic backbone is polypropylene glycol.

6. The adhesive or sealant according to one of Claims 1 to 5, **characterized in that** R¹ is an alkyl residue having 10 to 16 carbon atoms, in particular 12 to 14 carbon atoms, which can contain OH groups or epoxy groups.

7. The adhesive or sealant according to one of Claims 1 to 5, **characterized in that** the compounds of formula (I) have been manufactured from an ester of formula (III) 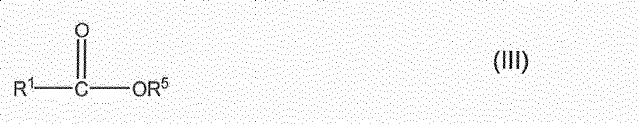 in which
R¹ is a straight-chain or branched, substituted or unsubstituted alkyl residue having 1 to 24 carbon atoms, and
R⁵ is a methyl or ethyl residue,
and a silane of formula (IV) 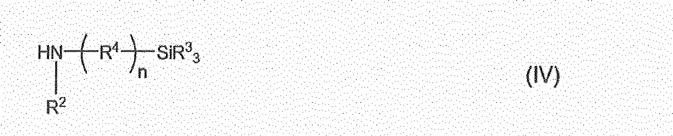 in which
R² is a hydrogen residue or a straight-chain or branched hydrocarbon residue having 1 to 10 carbon atoms,
R³ is an alkoxy residue having 1 to 8 carbon atoms or an alkyl residue having 1 to 24 carbon atoms,
R⁴ is a straight-chain or branched alkylene residue having 1 to 8 carbon atoms, in which carbon atoms can be substituted with nitrogen or oxygen atoms,
n = 1 to 8, preferably n = 3 to 8,
wherein the residues R³ can each be the same or different, and at least two of the residues are alkoxy residues.

8. The adhesive or sealant according to Claim 7, **characterized in that** the molar ratio of the compounds of formula (III) to compounds of formula (IV) is equal to 1:10 to 2:1, in particular 7:10 to 7:5.

9. The adhesive or sealant according to one of Claims 1 to 8, containing a polymer according to one of Claims 1 to 8, a vinylsilane, an aminosilane, an additive of formula (I) according to one of Claims 1 to 8, and a catalyst.

10. The adhesive or sealant according to Claim 9, **characterized in that** the proportion of compounds of formula (I) is equal to 0.1 to 50 percent by mass of the total binder content, in particular 5 to 30 percent by mass.

11. The adhesive or sealant according to Claim 9, **characterized in that** the proportion of compounds of formula (I) is equal to 9 to 11 percent by mass of the total binder content.

12. Use of a compound of formula (I) according to one of Claims 1 to 11 as an additive in silane-crosslinking adhesives or sealants.

13. Use of a compound of formula (I) according to one of Claims 1 to 11 as an additive in silane-crosslinking adhesives or sealants in order to increase elasticity.

14. Use of a silane-crosslinking adhesive or sealant according to one of Claims 1 to 11 for adhesive bonding of plastics, metals, glass, ceramic, wood, wood materials, paper, paper materials, rubber and textiles, floors.

15. Use of a silane-crosslinking adhesive or sealant according to one of Claims 1 to 11 for sealing of construction parts, windows, wall and floor coverings, and gaps.

## Revendications

1. Adhésif ou agent d'étanchéité réticulant par un silane, contenant un polymère constitué par une structure de base organique comprenant des atomes de carbone dans la chaîne principale, qui porte au moins deux groupes alcoxysilyle et/ou acyloxysilyle, **caractérisé en ce qu'**il contient, comme autre composant, des composés de formule (I) 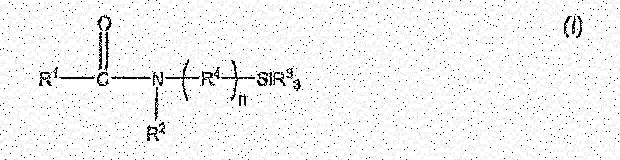 où
R¹ représente un résidu alkyle linéaire ou ramifié, substitué ou non substitué comprenant 1 à 24 atomes de carbone,
R² représente un résidu hydrogène ou un résidu hydrocarboné linéaire ou ramifié comprenant 1 à 10 atomes de carbone,
R³ représente un résidu alcoxy comprenant 1 à 8 atomes de carbone ou un résidu alkyle comprenant 1 à 24 atomes de carbone,
R⁴ représente un résidu alkylène linéaire ou ramifié comprenant 1 à 8 atomes de carbone, les atomes de carbone pouvant être substitués par des atomes d'azote ou d'oxygène,
n = 1 à 8, de préférence n = 3 à 8,
les résidus R³ pouvant à chaque fois être identiques ou différents et au moins deux des résidus étant des résidus alcoxy, en tant qu'additif, **caractérisé en ce que** la structure de base organique est choisie dans le groupe comprenant les polyamides, les polyéthers, les polyesters, les polycarbonates, les polyéthylènes, les polybutylènes, les polystyrènes, les polypropylènes, les polyacrylates, les poly(méth)acrylates, les homopolymères et copolymères de polyoxyméthylène, les polyuréthanes, les butyrates de vinyle, les polymères de vinyle, la rayonne, les copolymères d'éthylène, les copolymères d'éthylène-acide acrylique, les copolymères d'éthylène-acrylate, les caoutchoucs organiques.

2. Adhésif ou agent d'étanchéité selon la revendication 1, **caractérisé en ce que** R¹ représente un résidu alkyle linéaire ou ramifié, substitué ou non substitué comprenant 1 à 24 atomes de carbone, qui peut contenir des groupes OH ou époxy, et/ou R² représente un résidu hydrogène, butyle, cyclohexyle ou phényle et/ou R³ représente un résidu méthoxy, éthoxy ou alkyle comprenant 1 à 24 atomes de carbone.

3. Adhésif ou agent d'étanchéité selon la revendication 1 ou 2, **caractérisé en ce que** le polymère correspond à la formule générale (II) 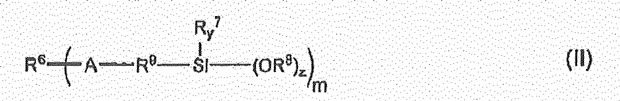 dans laquelle R⁶ représente une structure de base organique,
A représente un groupe de liaison divalent, en particulier un groupe amide, carbamate, urée ou carbamoyle, un atome d'oxygène, un atome d'azote ou un groupe méthylène,
R⁷ représente un résidu alkyle comprenant 1 à 8 atomes de carbone, en particulier un résidu alkyle comprenant 1 à 4 atomes de carbone,
R⁸ représente un résidu alkyle comprenant 1 à 8 atomes de carbone ou un résidu acyle comprenant 1 à 8 atomes de carbone, en particulier un résidu alkyle comprenant 1 à 4 atomes de carbone ou un résidu acyle comprenant 1 à 4 atomes de carbone,
R⁹ représente un résidu alkylène linéaire ou ramifié, substitué ou non substitué comprenant 1 à 8 atomes de carbone,
y = 0 à 2,
z = 3 - y et
m = 1 à 10 000,
les résidus silyle pouvant être identiques ou différents et, dans le cas de plusieurs résidus R⁷ ou, selon le cas R⁸, ceux-ci pouvant être à chaque fois identiques ou différents.

4. Adhésif ou agent d'étanchéité selon l'une quelconque des revendications 1 à 3, **caractérisé en ce que** la structure de base organique est un polyéther ou un polyuréthanne.

5. Adhésif ou agent d'étanchéité selon l'une quelconque des revendications 1 à 4, **caractérisé en ce que** la structure de base organique est le polypropylèneglycol.

6. Adhésif ou agent d'étanchéité selon l'une quelconque des revendications 1 à 5, **caractérisé en ce que** R¹ représente un résidu alkyle comprenant 10 à 16 atomes de carbone, en particulier 12 à 14 atomes de carbone, qui peut contenir des groupes OH ou époxy.

7. Adhésif ou agent d'étanchéité selon l'une quelconque des revendications 1 à 5, **caractérisé en ce que** les composés de formule (I) ont été préparés à partir d'un ester de formule (III) 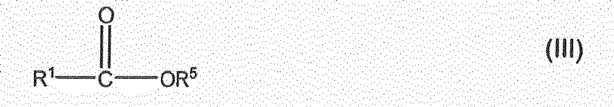 où
R¹ représente un résidu alkyle linéaire ou ramifié, substitué ou non substitué comprenant 1 à 24 atomes de carbone, et
R⁵ représente un résidu méthyle ou éthyle,
et d'un silane de formule (IV) 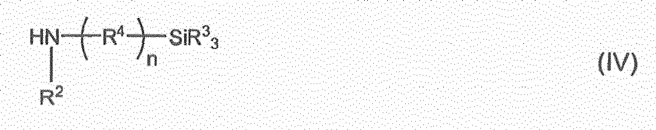 où
R² représente un résidu hydrogène ou un résidu hydrocarboné linéaire ou ramifié comprenant 1 à 10 atomes de carbone,
R³ représente un résidu alcoxy comprenant 1 à 8 atomes de carbone ou un résidu alkyle comprenant 1 à 24 atomes de carbone,
R⁴ représente un résidu alkylène linéaire ou ramifié comprenant 1 à 8 atomes de carbone, les atomes de carbone pouvant être substitués par des atomes d'azote ou d'oxygène,
n = 1 à 8, de préférence n = 3 à 8,
les résidus R³ pouvant à chaque fois être identiques ou différents et au moins deux des résidus étant des résidus alcoxy.

8. Adhésif ou agent d'étanchéité selon la revendication 7, **caractérisé en ce que** le rapport molaire des composés de formule (III) aux composés de formule (IV) vaut 1:10 à 2:1, en particulier 7: 1 0 à 7:5.

9. Adhésif ou agent d'étanchéité selon l'une quelconque des revendications 1 à 8, contenant un polymère selon l'une quelconque des revendications 1 à 8, un vinylsilane, un aminosilane, un additif de formule (I) selon l'une quelconque des revendications 1 à 8 et un catalyseur.

10. Adhésif ou agent d'étanchéité selon la revendication 9, **caractérisé en ce que** la proportion de composés de formule (I) est de 0,1 à 50 % en masse par rapport à la teneur totale en liant, en particulier 5 à 30 % en masse.

11. Adhésif ou agent d'étanchéité selon la revendication 9, **caractérisé en ce que** la proportion de composés de formule (I) est de 9 à 11 % en masse par rapport à la teneur totale en liant.

12. Utilisation du composé de formule (I) selon l'une quelconque des revendications 1 à 11 comme additif dans des adhésifs ou des agents d'étanchéité réticulant par un silane.

13. Utilisation du composé de formule (I) selon l'une quelconque des revendications 1 à 11 comme additif dans des adhésifs ou des agents d'étanchéité réticulant par un silane pour augmenter l'élasticité.

14. Utilisation d'un adhésif ou d'un agent d'étanchéité réticulant par un silane selon l'une quelconque des revendications 1 à 11 pour coller des matériaux synthétiques, des métaux, du verre, de la céramique, du bois, des matériaux à base de bois, du papier, des matériaux à base de papier, du caoutchouc et des textiles, des sols.

15. Utilisation d'un adhésif ou d'un agent d'étanchéité réticulant par un silane selon l'une quelconque des revendications 1 à 11 pour étanchéifier des pièces de construction, des fenêtres, des revêtements muraux et de sol ainsi que des joints.
